(19) Europäisches Patentamt
European Patent Office
Office européen des brevets

(11) **EP 2 649 430 B1**

(12) **FASCICULE DE BREVET EUROPEEN**

(45) Date de publication et mention de la délivrance du brevet:
**17.04.2019 Bulletin 2019/16**

(51) Int Cl.:
**G01N 21/47** *(2006.01)*  **G01N 21/49** *(2006.01)*
**G06T 7/20** *(2017.01)*  *G01N 15/02* *(2006.01)*

(21) Numéro de dépôt: **11811067.5**

(22) Date de dépôt: **09.12.2011**

(86) Numéro de dépôt international:
**PCT/FR2011/052920**

(87) Numéro de publication internationale:
**WO 2012/076826 (14.06.2012 Gazette 2012/24)**

(54) **PROCEDE ET DISPOSITIF DE CARACTERISATION DE LA DYNAMIQUE INTERNE D'UN ECHANTILLON DE MATIERE EN PRESENCE D'UN DEPLACEMENT RIGIDE**

VERFAHREN UND VORRICHTUNG ZUR CHARAKTERISIERUNG DER INTERNEN DYNAMIK EINER MATERIALPROBE IN GEGENWART EINER STARRKÖRPERVERSCHIEBUNG

METHOD AND DEVICE FOR CHARACTERIZING THE INTERNAL DYNAMICS OF A SAMPLE OF MATERIAL IN THE PRESENCE OF A RIGID DISPLACEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2010 FR 1060336**

(43) Date de publication de la demande:
**16.10.2013 Bulletin 2013/42**

(73) Titulaires:
• **Centre National de la Recherche Scientifique**
**75016 Paris (FR)**
• **Université de Montpellier**
**34090 Montpellier (FR)**

(72) Inventeur: **CIPELLETTI, Luca**
**34000 Montpellier (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**US-A1- 2002 183 601**

• **EL MASRI D ET AL: "Dynamic light scattering measurements in the activated regime of dense colloidal hard spheres", JOURNAL OF STATISTICAL MECHANICS: THEORY AND EXPERIMENT IOP PUBLISHING LTD. UK, vol. 2009, no. 07, juillet 2009 (2009-07), XP002656440, ISSN: 1742-5468**

**Description**

**Domaine technique**

La présente invention concerne un procédé de caractérisation de matériaux, comprenant en particulier une détermination de la dynamique microscopique interne de ces matériaux et de mouvements rigides.

Le domaine de l'invention est plus particulièrement mais de manière non limitative celui de la caractérisation de matière molle, et des matériaux ou produits comprenant des éléments en suspension dans un milieu.

**Etat de la technique antérieure**

Le mouvement rigide (ou déplacement rigide) d'un échantillon de matière, ou mouvement macroscopique, peut être décrit comme un mouvement global de l'échantillon au moins dans une zone de mesure. L'échantillon dans son ensemble, au moins dans la zone de mesure, réalise ce mouvement. Il est superposable à lui-même, au moins dans la zone de mesure, à tous les instants au cours de ce mouvement.

La dynamique microscopique interne d'un échantillon de matière désigne des mouvements internes qui ne se traduisent pas par un mouvement global de l'échantillon (ou d'au moins une zone de mesure de celui-ci). Il peut s'agir des mouvements relatifs des particules de l'échantillon de matière. Il s'agit par exemple de l'agitation thermique de particules à l'intérieur de l'échantillon, selon un mouvement Brownien : malgré un mouvement relatif des particules, le mouvement moyen est sensiblement nul.

On connaît dans l'art antérieur la technique de diffusion dynamique de la lumière (en anglais: *Dynamic Light Scattering* (DLS)) qui permet de mesurer une dynamique interne d'un échantillon de matière, et en particulier la dynamique microscopique de matières molles. Cette technique se base sur la mesure de fluctuations temporelles de l'intensité diffusée en champ lointain par l'échantillon lorsqu'il est éclairé par un faisceau laser.

L'inconvénient de cette technique est qu'elle ne permet pas de mesurer la dynamique microscopique interne d'un échantillon de matière qui est en mouvement relatif par rapport au détecteur d'intensité.

De plus, il est difficile de mesurer avec cette technique des vitesses de sédimentation, très lentes et donc facilement perturbées par les mouvements de l'environnement. Une solution proposée dans l'art antérieur consiste à recourir à des mesures de la turbidité de l'échantillon placé dans une centrifugeuse permettant d'accélérer la sédimentation. Une telle solution présente l'inconvénient de modifier de façon non prévisible le comportement de l'échantillon par rapport au cas où il n'est soumis qu'à la contrainte gravitationnelle.

En outre, tout mouvement rigide de l'échantillon perturbant la mesure, toute vibration du détecteur d'intensité et tout mouvement rigide de l'échantillon doivent être évités. Les conditions de mesure sont donc difficiles à mettre en oeuvre.

US 2002/0183601 A1 concerne un système et un procédé pour l'analyse d'échantillons en utilisant des figures de Speckle.

On connaît notamment le document de D. El Masri, G. Brambilla, M. Pierno, G. Petekidis, A.B. Schofield, L. Berthier et L. Cipelletti, « Dynamic light scattering measurements in the activated regime of dense colloidal hard spheres », Journal of Statistical Mechanics: Theory and Experiment, P07015, 2009.

Cet article propose d'étudier la sédimentation d'un échantillon à partir de l'étude de figures de speckle de cet échantillon.

Pour cela, on calcule, avec une précision inférieure au pixel, la dérive de la figure de speckle pour une paire d'images prises aux temps $t_w$ et $t_w+\tau$. Cette dérive est obtenue en calculant la corrélation croisée entre les deux images, et correspond à un mouvement rigide de l'échantillon étudié.

La première image est ensuite décalée de la valeur de cette dérive. Le décalage étant calculé avec une précision subpixel, il est nécessaire de calculer une interpolation de la première image pour pouvoir la décaler de la valeur de la dérive.

On calcule ensuite le coefficient de corrélation entre la première image corrigée de la dérive et la seconde image.

Le calcul nécessite donc, en plus du premier calcul de corrélation croisée, un calcul d'interpolation suivi d'un nouveau calcul de coefficient de corrélation.

Un inconvénient d'un tel procédé est donc qu'il nécessite un temps de calcul très long.

Un autre inconvénient de ce procédé est qu'il requiert une puissance de calcul très élevée.

Un objet de la présente invention est de proposer un procédé de caractérisation d'une dynamique microscopique interne d'un échantillon de matière, ne présentant pas les inconvénients de l'art antérieur.

Un autre objet de la présente invention est de proposer un produit programme d'ordinateur, agencé pour exécuter les étapes du procédé selon l'invention lorsqu'il est exécuté dans un ordinateur.

Un autre objet de la présente invention est de proposer un dispositif comprenant des moyens pour acquérir plusieurs images successives d'un échantillon, et comprenant en outre des moyens de calcul mettant en oeuvre le procédé selon l'invention.

**Exposé de l'invention**

Cet objectif est atteint avec un procédé de caractérisation de la dynamique interne d'un échantillon de matière comprenant un milieu et des éléments en suspension dans ledit milieu, comprenant des étapes :

- d'obtention d'au moins deux images $I$, $J$ de l'échantillon, lesdites au moins deux images $I$, $J$ comprenant une information sur lesdits éléments en suspension, et correspondant respectivement à des instants de mesure $t$ et $t+\tau$,
- de calcul des termes d'une matrice de covariance croisée cov[$J$,$I$]($k$,$l$) entre les images $I$, $J$, où $k$ et $l$ sont les coordonnées des pixels selon les lignes et les colonnes des images, respectivement.

Le procédé selon l'invention comprend en outre des étapes :

- de détermination, en utilisant ladite matrice de covariance croisée cov[$J$,$I$], de déplacements rigides $\Delta x$ selon les lignes et $\Delta y$ selon les colonnes, des éléments en suspension entre les images $I$ et $J$,
- de caractérisation de la dynamique microscopique interne de l'échantillon, comprenant le calcul d'un coefficient de corrélation $C'_I(t, \tau)$ corrigé de l'effet des déplacements rigides.

Les images $I$ et $J$ peuvent être considérées respectivement comme des matrices comprenant $N_{im}$ pixels sans perte de généralité.
Dans la suite, on pourra désigner par « pixel » un terme (ou coefficient) d'une matrice, que ce soit l'image $I$, l'image $J$, la matrice de covariance croisée cov[$J$,$I$], ou d'autres matrices.
Les images $I$ et $J$ peuvent être par exemple des images acquises dans une étape préalable et stockées sous forme de fichiers informatiques, ou des images acquises avec un capteur d'imagerie et traitées sensiblement en temps réel.
Des déplacements rigides $\Delta x$ selon les lignes et $\Delta y$ selon les colonnes, des éléments en suspension entre les images $I$ et $J$, peuvent désigner un décalage décomposé selon les lignes et selon les colonnes de pixels, entre l'image $I$ et l'image $J$.
La matrice de covariance croisée entre les images $I$ et $J$ peut être définie par :

$$\mathrm{cov}[J, I](k,l) = N^{-1}(k,l)\sum_{r,c} J_{r,c} I_{k+r,c+l} - N^{-2}(k,l)\sum_{r,c} J_{r,c} \sum_{r,c} I_{r+k,c+l} \,. \quad (\text{Eq. } 1)$$

$I_{r,c}$ est l'intensité au temps $t$ enregistrée sur le pixel de la ligne $r$ et de la colonne $c$ de l'image $I$.
$J_{r,c}$ est l'intensité au temps $t+\tau$ enregistrée sur le pixel de la ligne $r$ et de la colonne $c$ de l'image $J$.
$k$ et $l$ sont des déplacements exprimés respectivement en nombre de lignes de pixels et nombre de colonnes de pixels.

Les sommes dans l'équation 1 peuvent être faites pour toutes les lignes de pixels et toutes les colonnes de pixels telles que les lignes d'indice $r$ et $r+k$ et les colonnes d'indice $c$ et $c+l$ restent dans la taille de l'image initiale.
$N(k, l)$ correspond au nombre de pixel sur la surface de superposition entre l'image $J$ et l'image $I$ décalée de $k$ lignes et $l$ colonnes.
Les sommes sont donc faites pour les superpositions entre l'image $J$ initiale et l'image $I$ déplacée de $k$ lignes, $l$ colonnes, ces superpositions contenant un nombre $N(k,l)$ de pixels qui dépendra en général de $k$ et $l$.
Le procédé selon l'invention comprend la détermination, avec une précision inférieure au pixel, du mouvement rigide (ou des déplacements rigides $\Delta x$ et $\Delta y$) entre les images $I$ et $J$, c'est-à-dire par exemple du mouvement rigide de l'échantillon par rapport à un détecteur ou un capteur d'imagerie, entre les instants respectifs $t$ et $t+\tau$ d'acquisition des images $I$ et $J$ par ledit détecteur ou capteur d'imagerie. Ce mouvement rigide peut être déterminé de manière classique comme correspondant à la position d'un maximum de la fonction de corrélation croisée entre les images $I$ et $J$. La précision obtenue pour positionner ce maximum correspond à la précision avec laquelle on détermine le mouvement rigide entre les images $I$ et $J$. $\Delta x$ et $\Delta y$ sont de préférence des estimations, avec une précision inférieure au pixel, d'un mouvement rigide réel entre les images $I$ et $J$.
Ce maximum peut notamment être déterminé à partir de la matrice de corrélation croisée entre les images $I$ et $J$, définie par :

$$\mathrm{corr}[J, I](k, l) = \frac{\mathrm{cov}[J, I](k, l)}{\sqrt{\mathrm{var}[J](k, l)\,\mathrm{var}[I](k, l)}} \, , \qquad \text{(Eq. 2)}$$

avec

$$\mathrm{var}[I](k, l) = N^{-1}(k, l)\sum_{r,c} I_{r,c}^2 - \left( N^{-1}(k, l)\sum_{r,c} I_{r,c} \right)^2 . \qquad \text{(Eq. 3)}$$

Le procédé selon l'invention permet en outre de caractériser la dynamique microscopique interne de l'échantillon. La dynamique microscopique interne correspond à la valeur du coefficient de corrélation entre les images $I$ et $J$ après correction du mouvement rigide pour l'image $J$. On parle donc de coefficient de corrélation corrigé $C_I'(t, \tau)$. Ce coefficient de corrélation corrigé correspond à la valeur du maximum de la fonction de corrélation croisée entre les images $I$ et $J$.

Un coefficient de corrélation corrigé $C_I'(t, \tau)$ égal à l'unité correspond à une dynamique microscopique interne nulle.

Plus le coefficient de corrélation corrigé $C_I'(t, \tau)$ tend vers rapidement vers zéro, plus la dynamique microscopique interne est importante. Cela correspond de préférence à des mouvements rapides et désordonnés des particules les unes par rapport aux autres dans l'échantillon de matière.

La valeur du coefficient de corrélation corrigé $C_I'(t, \tau)$, ainsi que son évolution au cours du temps, permettent donc de caractériser de façon qualitative la dynamique microscopique interne de l'échantillon étudié. (On considère une image $I$ donnée correspondant au temps $t$, que l'on compare à différentes images $J$ acquises à plusieurs instants différents $t+\tau$, soit $t$ fixe.)

On peut aussi obtenir des informations quantitatives sur la dynamique microscopique interne de l'échantillon. On réalise par exemple une modélisation mathématique de plusieurs types de dynamiques microscopiques internes, ces modélisation permettant de relier une évolution au cours du temps du coefficient de corrélation corrigé $C_I'(t, \tau)$, à des données physiques sur la dynamique microscopique interne dans l'échantillon de matière. Ces données peuvent être un coefficient de diffusion des particules. Ensuite, on mesure l'évolution au cours du temps du coefficient de corrélation corrigé $C_I'(t, \tau)$, et par interpolation on en déduit le modèle mathématique correspondant à cette évolution et au moins une donnée physique telle qu'un coefficient de diffusion des particules.

Le procédé selon l'invention permet en outre de découpler la mesure du mouvement rigide de la mesure de la dynamique microscopique interne d'un échantillon de matière.

Le procédé selon l'invention nécessite comme dans l'art antérieur un calcul du mouvement rigide $\Delta x$ et $\Delta y$ entre les images $I$ et $J$, nécessitant de déterminer la matrice cov[$J,I$].

Ensuite :

- selon l'art antérieur tel que l'article de El Masri et al. cité précédemment, il faut calculer des valeurs interpolées de tous les pixels de l'image $I$ (par exemple) pour pouvoir décaler cette image d'une quantité correspondant au mouvement rigide $\Delta x$ et $\Delta y$ obtenu qui ne correspond pas dans le cas général à un nombre entier de pixels. Enfin, il faut de nouveau calculer un coefficient de corrélation entre l'image $I$ décalée et l'image $J$ pour obtenir la dynamique interne ;

- selon l'invention, il suffit de calculer un coefficient de corrélation $C_I'(t, \tau)$ corrigé du décalage entre les images $I$ et $J$.

Le temps de calcul est ainsi fortement réduit.
La puissance de calcul requise est ainsi fortement réduite.
Le résultat obtenu peut être plus précis.
Les mouvements rigides peuvent être tels que l'échantillon reste superposable à lui-même, par exemple des translations ou des rotations rigides.

Les mouvements rigides peuvent aussi être des déformations, des rotations, ou tout déplacement de parties seulement de l'échantillon, tels que des mouvements de convection. Ces déformations apparaissent également, au niveau de petites zones de l'échantillon, comme des translations locales.

Ainsi, le procédé selon l'invention permet de faire des mesures de dynamique interne d'échantillon corrigées de l'influence de nombreux types de déformations rigides. Il suffit pour cela de « découper » l'échantillon en plus petites régions dites régions d'intérêt et d'étudier des images de ces régions d'intérêt. L'effet des déformations globales au niveau de ces régions d'intérêt peut être approximé par des translations, dont l'influence peut être corrigée par le procédé selon l'invention.

Selon l'invention, le calcul d'un coefficient de corrélation corrigé de l'effet des déplacements rigides comprend une combinaison linéaire de termes de la matrice de covariance croisée cov[$J,I$]($k,l$) multipliés par des coefficients de pondération déterminés à partir d'une fonction $_{2D}h(x,y)$ apte à constituer une fonction noyau d'un opérateur intégral d'interpolation.

En d'autres termes, le coefficient de corrélation $C'_I(t,\tau)$ corrigé peut être obtenu directement sur la base d'une opération d'interpolation effectuée sur les termes de la matrice de covariance croisée cov[$J,I$]($k,l$), cette interpolation comprenant une convolution avec la fonction noyau $_{2D}h(x,y)$.

Avantageusement, le procédé selon l'invention permet de calculer ce coefficient de corrélation corrigé en utilisant directement les termes de la matrice de covariance croisée cov[$J,I$]($k,l$) calculées au préalable pour déterminer les déplacements rigides. Ainsi, le coût en termes d'opérations de calcul est significativement réduit par rapport aux techniques de l'art antérieur.

La matrice de covariance croisée cov[$J,I$] se présente généralement sous la forme d'une matrice comprenant essentiellement des valeurs de très faible amplitude qui peuvent être approximées par des zéros, excepté de façon très localisée dans une zone située autour du maximum. En effet, la fonction de covariance croisée et la fonction de corrélation croisée peuvent comprendre dans le cas général un unique pic appelé respectivement pic de covariance et pic de corrélation. Le calcul du coefficient de corrélation $C'_I(t,\tau)$ corrigé peut alors avantageusement être effectué en prenant en compte un nombre limité de termes de la matrice de covariance cov[$J,I$]($k,l$), contrairement aux opérations de décalage et d'interpolation d'images de l'art antérieur qui doivent être effectuées sur le totalité des images.

On diminue ainsi encore le temps de calcul et la puissance de calcul requis.

Suivant des modes de réalisation :

- la fonction $_{2D}h(x,y)$ peut être une fonction symétrique et séparable de la forme $_{2D}h(x,y)=h(x) \cdot h(y)$ avec $h(x) = 0$ pour tout $x$ tel que $|x| > Q/2$, avec $Q$ entier, et
- en écrivant les déplacements rigides sous la forme $\Delta x = j_x + \tilde{\delta x}$ avec $j_x$ entier et $0 \leq \tilde{\delta x} < 1$, et $\Delta y = i_y + \tilde{\delta y}$ avec $i_y$ entier et $0 \leq \tilde{\delta y} < 1$, respectivement, le calcul des coefficients de pondération peut comprendre un produit d'une fonction $h(k)$ centrée en $\tilde{\delta y}$ et exprimée selon les lignes $k$ et d'une fonction $h(l)$ centrée en $\tilde{\delta x}$ et exprimée selon les colonnes $l$.

Le paramètre Q peut être choisi de sorte que la largeur de la fonction $h(x)$ corresponde à entre deux et cinq fois la largeur à mi-hauteur du pic de la fonction ou matrice de covariance croisée entre les images $I$ et $J$.

La fonction $h(x)$ peut comprendre une fonction sinus cardinal multipliée par une fonction fenêtre $w(x)$ :

$$h(x) = w(x) \cdot \mathrm{sinc}(x) = w(x) \cdot \sin(\pi x)/(\pi x) \qquad \text{(Eq. 4)}$$

La fonction fenêtre $w(x)$ peut être une fonction de type Blackman-Harris.

Le procédé selon l'invention peut en outre comprendre, au titre du calcul d'un coefficient de corrélation $C'_I(t,\tau)$ corrigé de l'effet de déplacements rigides, une étape de calcul du coefficient de corrélation corrigé $C'_I(t,\tau)$ entre les images $I$ et $J$ selon la formule :

$$C'_I(t,\tau) = \frac{\sum_{k,l=-Q/2+1}^{Q/2} h(\tilde{\delta y} - k) \cdot h(\tilde{\delta x} - l) \cdot \mathrm{cov}[J,I](k+i_y, l+j_x)}{\overline{J}\,\overline{I}}, \qquad \text{(Eq. 5)}$$

où $\bar{I}$ et $\bar{J}$ sont les intensités moyennes des images *I* et *J,* respectivement.

On peut interpréter le terme

$$\sum_{k,l=-Q/2+1}^{Q/2} h(\widetilde{\delta y}-k)\cdot h(\widetilde{\delta x}-l)\cdot \text{cov}[J,I](k+i_y, l+j_x) \qquad \text{(Eq. 6)}$$

comme la valeur de la fonction de covariance croisée en $\Delta x$ et $\Delta y$. On peut en particulier interpréter ce terme comme la valeur d'une interpolation de la fonction de covariance croisée en $\Delta x$ et $\Delta y$.

Selon des modes de réalisation avantageux, le procédé selon l'invention comprend en outre, au titre de la détermination des déplacements rigides $\Delta x$ et $\Delta y$, des étapes :

- de calcul (comme précédemment) d'une matrice de corrélation croisée entre les images *I* et *J,*

$$\text{corr}[J,I](k,l) = \frac{\text{cov}[J,I](k,l)}{\sqrt{\text{var}[J](k,l)\text{var}[I](k,l)}}, \qquad \text{(Eq. 7)}$$

où var[*I*] et var[*J*] sont la variance des images *I* et *J,* respectivement,
- de détermination du déplacement rigide avec une résolution d'un pixel $\bar{k}, \bar{l}$ lequel correspond à la position du maximum de ladite matrice de corrélation croisée corr[*J,I*],
- d'expression de pixels de l'image *J* comme combinaison linéaire de quatre pixels d'une image *K* pondérés respectivement par un coefficient $a_1$, $a_2$, $a_3$ et $a_4$, où l'image *K* correspond à l'image *I* translatée de $\bar{k}$ lignes de pixels et $\bar{l}$ colonnes de pixels,
- de détermination de coefficients $a_1$, $a_2$, $a_3$ et $a_4$, qui minimisent le carré de la différence entre l'image *J* et l'image *K,*
- de détermination à partir des coefficients $a_1$, $a_2$, $a_3$ et $a_4$, avec une précision inférieure au pixel, du déplacement rigide entre les images *I* et *J.*

Ce procédé de détermination des déplacements rigide $\Delta x$ et $\Delta y$ basé sur un algorithme de minimisation du carré de la différence entre deux images permet de déterminer avec une très bonne précision le mouvement rigide entre les images *I* et *J.* Les contraintes en termes de ressources de calcul sont sensiblement réduites en comparaison d'autres procédés de l'art antérieur.

Le procédé peut comprendre en outre, au titre de l'expression de pixels de l'image *J* comme combinaison linéaire de quatre pixels d'une image *K* pondérés respectivement par un coefficient $a_1$, $a_2$, $a_3$ et $a_4$, une étape de calcul de coefficients d'offset $k_1$, $k_2$, $k_3$, $k_4$ et $l_1$, $l_2$, $l_3$, $l_4$ représentatifs de la direction dans laquelle se trouve le centre de masse du pic de la fonction de corrélation croisée corr[*J,I*],

- laquelle direction étant définie sous la forme d'une division en quatre quadrants des neufs pixels entourant et incluant le pixel de position $\bar{k}, \bar{l}$,
- lesquels coefficients d'offset étant définis de telle sorte que, en supposant la dynamique microscopique interne nulle, l'intensité $J_{r,c}$ d'un pixel de l'image *J* de coordonnée (*r, c*) soit égale à

$$J_{r,c} = \sum_{i=1}^{4} a_i K_{r+k_i, c+l_i}, \qquad \text{(Eq. 8)}$$

- lequel calcul de coefficients d'offsets comprenant des combinaisons linéaires de termes de la matrice de corrélation croisée corr[*J,I*]($\bar{k}+i, \bar{l}+j$) avec *i* = {-1, 0, 1} et *j* = {-1, 0, 1}, pondérés par des coefficients géométriques $\alpha_1, \alpha_2, \alpha_3$,
- lesquels coefficients géométriques étant sensiblement représentatifs des surfaces de recouvrement, dans un cadrant, du disque de plus grand diamètre inscrit dans les neuf pixels entourant et englobant le pixel de position $\bar{k}, \bar{l}$ avec les portions de surface de pixels incluses dans ledit quadrant.

Les neuf pixels incluant le pixel de position $\bar{k}, \bar{l}$ et les huit pixels qui l'entourent, sont découpés en quatre carrés de même surface, chaque carré pouvant constituer un quadrant.

Ainsi, pour exprimer chaque pixel de l'image $J$ comme une combinaison linéaire de quatre pixels d'une image $K$ pondérés respectivement par un coefficient $a_1$, $a_2$, $a_3$ et $a_4$, on peut mettre en oeuvre les étapes suivantes :

- soit le pixel $(\overline{k}, \overline{l})$ et les huit pixels voisins, on découpe ces neufs pixels en quatre quadrants de mêmes dimensions,
- on calcule les valeurs des contributions de corr$[J,I](k,l)$ en chaque quadrant,
- on en déduit le quadrant dans lequel se trouve le centre de masse du pic de corrélation, et
- on en déduit les coefficients $k_1$, $k_2$, $k_3$, $k_4$ et $l_1$, $l_2$, $l_3$, $l_4$.

Théoriquement, un pixel de l'image $J$ est la combinaison linéaire de neuf termes correspondant respectivement au pixel de mêmes coordonnées sur l'image $K$ et aux huit autres pixels de l'image $K$ qui l'entourent. En remarquant que parmi ces neuf termes, seuls quatre sont différents de zéro, on simplifie considérablement les calculs et on améliore encore l'efficacité du procédé selon l'invention.

Le procédé de détermination des déplacements rigides $\Delta x$ et $\Delta y$ selon l'invention peut comprendre en outre une étape de détermination des coefficients $a_1$, $a_2$, $a_3$ et $a_4$ par résolution du système d'équations :

$$b = M \cdot a \,, \qquad\qquad\qquad (\text{Eq. } 9)$$

où pour $i$ et $j$ entiers variant de 1 à 4,

$$b = \{b_i\}\,;\, b_i = \text{cov}[J, I](k_i, l_i)\,,$$

$$a = \{a_1, a_2, a_3, a_4\}$$

et

$$M = \{M_{i,j}\}\,;\, M_{i,j} = \text{cov}[I, I](k_i - k_j, l_i - l_j).$$

Avantageusement, $b$ est déjà déterminé car cov$[J,I]$ a déjà été calculé pour obtenir les indices $\overline{k}, \overline{l}$, c'est-à-dire pour calculer le déplacement rigide avec une précision au pixel près.

Le seul surcoût computationnel est donc le calcul de la matrice $M$, soit l'autocovariance de l'image I, puis la résolution d'un système linéaire de quatre équations.

Le temps de calcul et la puissance de calcul nécessaires sont donc très restreints.

On remarque en outre que généralement, une même image initiale $I$ acquise au temps $t$ est comparée à plusieurs images $J$, $J'$, $J''$, etc. acquises pour différents retards (par exemple acquises respectivement aux temps $t+\tau$, $t+2\tau$, $t+3\tau$, etc). Le calcul de la matrice $M$ est donc mutualisé pour plusieurs acquisitions à différents retards, d'où une économie supplémentaire en temps de calcul et en puissance de calcul requise.

Le procédé selon l'invention peut en outre comprendre une étape de détermination, avec une précision inférieure au pixel, du déplacement $(\Delta x, \Delta y)$ entre les images $I$ et $J$, selon les équations :

$$\Delta x = \frac{a_2 + a_4}{\displaystyle\sum_{i=1}^{4} a_i} + l_1 \quad, \text{ et} \qquad\qquad (\text{Eq. } 10)$$

$$\Delta y = \frac{a_3 + a_4}{\displaystyle\sum_{i=1}^{4} a_i} + k_1 \,. \qquad\qquad (\text{Eq. } 11)$$

Physiquement parlant, $a_1$, $a_2$, $a_3$ et $a_4$ représentent chacun une surface de portion d'un même pixel de l'image J. De préférence :

- les portions de pixel $a_1$ et $a_2$ sont agencées en ligne,
- les portions de pixel $a_3$ et $a_4$ sont agencées en ligne
- les portions de pixel $a_2$ et $a_4$ sont agencées en colonne, et
- les portions de pixel $a_1$ et $a_3$ sont agencées en colonne.

Ainsi, le procédé selon l'invention comprend une utilisation optimale des termes de la matrice de covariance croisée $cov[J,I](k,l)$, aussi bien pour déterminer le déplacement rigide que la dynamique interne, et permet ainsi une optimisation globale des besoins en termes de ressources de calcul.

Le procédé selon l'invention peut comprendre une étape d'obtention d'images $I$ et $J$ de speckle.

On peut parler en français de tavelures ou chatoiements. Une image de speckle est formée de petites taches rapidement fluctuantes en intensité qui apparaissent dans la texture d'une image et qui lui donnent un aspect granuleux.

Elles peuvent être dues à la diffusion des ondes d'un faisceau de lumière cohérente, par exemple un faisceau émis par un laser, par un échantillon présentant des irrégularités à l'échelle de la longueur d'onde dudit faisceau. Le phénomène est dû en particulier aux interférences entre les rayons diffusés par chaque point de l'échantillon.

La taille moyenne des petites taches qu'on observe est liée au système optique qui permet de regarder l'échantillon (par exemple une lentille de projection ou l'oeil) et non pas à la nature de l'échantillon.

Une image de speckle permet donc d'observer à une échelle macroscopique (taille des taches, déterminée notamment par le système optique qui permet de regarder l'échantillon, et par exemple supérieure à $100\mu m^2$) des variations de l'échantillon à l'échelle de la longueur d'onde, typiquement comprises entre 100nm et $500\mu m$. On peut notamment observer l'effet de particules dont la taille varie entre le nanomètre et les dizaines de micromètres.

Les images $I$ et $J$ peuvent aussi être des visualisations directes de l'échantillon, notamment lorsque le système optique d'acquisition des images $J$ et $I$ possède une résolution suffisante pour visualiser les particules à l'origine d'une dynamique microscopique interne.

Les images $I$ et $J$ peuvent être en général des images présentant :

- des motifs avec des déplacements globaux, représentatifs du mouvement rigide de l'échantillon, et
- des variations fines, représentatives de la dynamique microscopique interne de l'échantillon.

Le procédé selon l'invention peut être mis en oeuvre par exemple pour caractériser un échantillon comprenant au moins un produit parmi :

- un produit cosmétique,
- une peinture,
- un produit agro-alimentaire,
- un produit pharmaceutique.

Plus généralement, l'échantillon peut comprendre au moins un élément parmi :

- une matière molle,
- une suspension colloïdale (Une suspension colloïdale est une substance sous forme de liquide ou galénique semi-solide sous laquelle peuvent se présenter des préparations, par exemple pharmaceutiques ou cosmétiques, qui contiennent en suspension des particules suffisamment petites pour que le mélange soit homogène),
- une émulsion,
- des biomolécules (par exemple pour étudier l'actine),
- une solution de polymère,
- un fondu de polymère,
- une gouttelette,
- une mousse,
- une phase de tensioactifs.

Le procédé selon l'invention peut comprendre en outre une étape de détermination d'au moins une propriété de l'échantillon parmi :

- une vitesse de sédimentation,
- une propriété rhéométrique,
- une propriété dynamique sous écoulement,
- une taille de particules,
- une réponse à une contrainte interne,

- une mesure d'agrégation de particules,
- une propriété de diffusion de la lumière.

Une propriété rhéométrique (par exemple la viscosité) qualifie le comportement d'un matériau en fonction de contraintes externes qui lui sont appliquées.

Une réponse à une contrainte interne peut désigner un comportement d'un échantillon par exemple lors d'un processus de gélification.

Il est par exemple possible avec le procédé selon l'invention de déterminer une taille de particules (on parle notamment de « particle sizing ») en mesurant le mouvement de ces particules, c'est-à-dire la dynamique microscopique interne d'un échantillon comprenant ces particules. En effet, la taille des particules est liée à l'amplitude de leur mouvement microscopique interne et ceci même en présence d'un mouvement global rigide.

Il est également possible de déterminer une propriété dynamique d'un fluide en écoulement puisque le procédé selon l'invention permet de découpler le mouvement rigide (écoulement) d'une dynamique microscopique interne. On peut parler de caractérisation en ligne d'un produit, par exemple en relevant des images *I* et *J* d'un échantillon qui coule dans une conduite ou dans les capillaires d'un microsystème (MEMS) mettant en oeuvre des techniques de microfluidique.

Une mesure de dynamique microscopique interne d'un échantillon peut permettre, de façon générale, d'étudier des propriétés mécaniques de cet échantillon, en particulier de caractériser des réarrangements irréversibles lors de tests de propriété mécanique.

Une propriété de diffusion de la lumière peut désigner en particulier un coefficient de diffusion de particules de l'échantillon étudié.

Le procédé selon l'invention peut être utilisé pour déterminer une vitesse de sédimentation avec précision, même très lente. Un échantillon peut sédimenter à cause de la contrainte gravitationnelle. On peut mesurer des vitesses de mouvement rigide (sédimentation) même très faibles (par exemple de l'ordre de la dizaine de nanomètres par heure), et même en présence d'une dynamique microscopique interne.

Suivant un autre aspect, il est proposé un produit programme d'ordinateur, agencé pour exécuter les étapes du procédé selon l'invention lorsqu'il est exécuté dans un ordinateur.

On peut ainsi automatiser le fonctionnement du procédé.

Suivant encore un autre aspect, il est proposé un dispositif pour déterminer un mouvement rigide et une dynamique microscopique interne, d'un échantillon comprenant un milieu et des éléments en suspension dans ledit milieu, le dispositif comprenant des moyens optiques et d'imagerie aptes à permettre l'obtention d'images de l'échantillon comprenant une information sur lesdits éléments en suspension, et des moyens de calcul aptes à mettre en oeuvre le procédé selon l'invention.

Les moyens optiques et d'imagerie peuvent permettre d'acquérir plusieurs images successives d'un échantillon, telles que les images *I* et *J* utilisées dans le procédé selon l'invention.

Les moyens optiques et d'imagerie peuvent comprendre une source de lumière apte à produire un faisceau de lumière sensiblement cohérente illuminant l'échantillon selon un axe optique d'illumination, et des moyens d'imagerie disposés selon un axe d'imagerie et aptes à former sur un détecteur matriciel une image de l'effet de speckle provoqué par la diffusion de ladite lumière sensiblement cohérente par les éléments en suspension.

La source de lumière peut être une source laser.

L'axe optique d'illumination et l'axe d'imagerie peuvent être sensiblement perpendiculaires.

L'axe optique d'illumination et l'axe d'imagerie peuvent également êtres disposés de telle sorte à former entre eux un angle quelconque, par exemple proche de zéro degré, auquel cas les mesures se font en transmission ou en diffusion à petits angles. L'axe optique d'illumination et l'axe d'imagerie peuvent également êtres disposés de telle sorte à former entre eux un angle proche de 180 degrés auquel cas les mesures se font en rétrodiffusion.

On peut parler de détecteur multi-éléments ou de détecteur matriciel. On désigne ainsi tout détecteur tel que l'image acquise soit découpée en pixels. Le détecteur matriciel peut comprendre un détecteur CCD (pour l'anglais « Charge-Coupled Device ») ou CMOS (pour l'anglais « Complementary Metal Oxide Semiconductor »).

Les moyens optiques et d'imagerie peuvent comprendre en outre une optique de formation d'image.

Les moyens optiques et d'imagerie peuvent comprendre des moyens pour former une image de speckle de l'échantillon et un détecteur matriciel.

Les moyens pour former une image de speckle peuvent être adaptés pour que la taille d'une tache de speckle corresponde sensiblement à la taille d'un pixel du détecteur matriciel (par exemple $100 \mu m^2$).

On peut observer qu'un temps caractéristique des fluctuations d'intensité liées à la dynamique microscopique interne augmente fortement lorsqu'on diminue l'angle entre les axes d'illumination et d'imagerie, ou l'angle auquel la lumière diffusée est détectée. On peut donc adapter cet angle en fonction des besoins de l'application (par exemple en fonction de la rapidité d'un détecteur utilisé).

Suivant des modes de réalisation, le dispositif peut être apte à être porté par un opérateur pour effectuer des mesures, ou portatif.

On peut prévoir un dispositif compact de type « pistolet » tenu en main par un utilisateur.

Le procédé selon l'invention permet de corriger les effets des vibrations de la main de l'utilisateur sur une mesure effectuée sur un échantillon.

Suivant d'autres modes de réalisation, le dispositif selon l'invention peut être conçu de telle sorte à être apte à faire des mesures sur un échantillon en défilement.

Le dispositif selon l'invention peut être intégré sur une puce microfluidique, en particulier pour déterminer une propriété dynamique sous écoulement d'un échantillon. On obtient ainsi un dispositif d'analyse intégré intégrant sur une même puce jetable un canal microfluidique et le dispositif selon l'invention.

Il est à noter que pour les applications industrielles du procédé en général, l'amélioration de la rapidité du calcul et la modération des besoins en ressources de calcul, qui sont précisément un objet de l'invention, sont déterminantes.

## Description des figures et modes de réalisation

D'autres avantages et particularités de l'invention apparaîtront à la lecture de la description détaillée de mises en oeuvre et de modes de réalisation nullement limitatifs, et des dessins annexés suivants :

- la figure 1 illustre un objet comprenant un échantillon étudié selon l'invention ;
- la figure 2 illustre un mouvement rigide et une dynamique microscopique interne d'un échantillon selon l'invention ;
- la figure 3 illustre une vue en perspective d'une représentation de la fonction de corrélation croisée entre les images $I$ et $J$ ;
- la figure 4 illustre une représentation de la fonction de corrélation croisée entre des images lignes $I$ et $J$ ;
- les figures 5A à 5D illustrent chacune une vue en perspective d'une représentation de la fonction de corrélation croisée entre une image $I$ et respectivement quatre images acquises à différents instants ;
- la figure 5E illustre une superposition de coupes des représentations des figures 5A à 5D ;
- la figure 6 illustre un déplacement rigide calculé d'un échantillon en fonction du temps, pour deux vitesses ;
- la figure 7 illustre pour ces deux vitesses le rapport entre la vitesse de déplacement rigide réelle et celle mesurée par le procédé selon l'invention ;
- la figure 8 illustre des évolutions du coefficient de corrélation corrigé et non corrigé entre deux images I et J ;
- la figure 9 illustre le déplacement subpixel entre des images $I$ et $J$ selon l'invention ;
- la figure 10 illustre des pixels de la matrice de corrélation croisée entre les images $I$ et $J$ autour de sa valeur maximale ;
- les figures 11A, 11B, 11C et 12 illustrent des variantes de moyens optiques et d'imagerie selon l'invention ;
- la figure 13 illustre un dispositif portatif selon l'invention ; et
- la figure 14 illustre un dispositif selon l'invention utilisé pour mesurer une propriété dynamique sous écoulement.

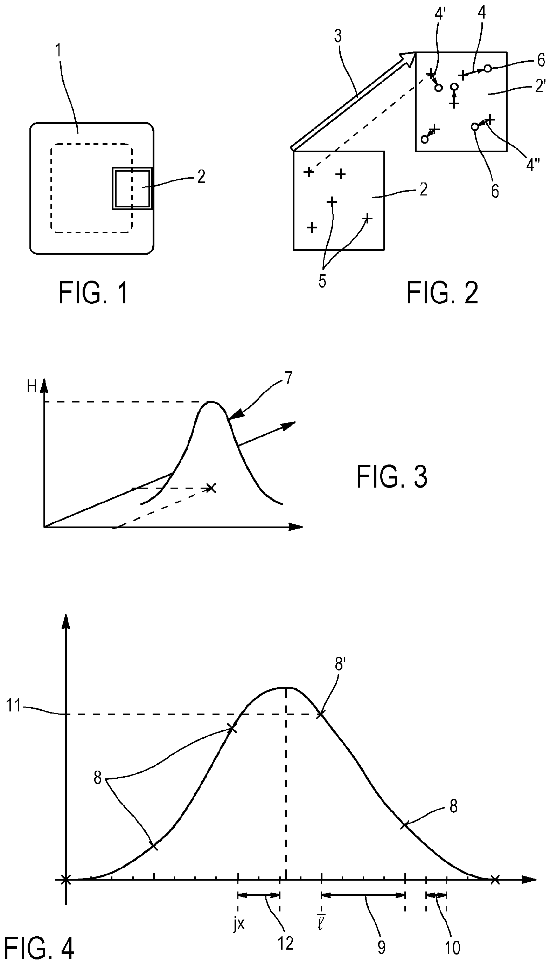

On va tout d'abord décrire, en référence à la figure 1, un échantillon de matière selon l'invention. Soit un objet 1 à étudier subissant une déformation : les traits en pointillés représentent la forme de l'objet 1 après un intervalle de temps $\tau$. On définit sur l'objet 1 des régions d'intérêt (une région d'intérêt est encadrée par des traits doubles à la figure 1) telles que l'on puisse considérer le déplacement de l'objet 1 dans cette région d'intérêt comme un déplacement rigide. Chaque région d'intérêt constitue un échantillon 2 selon l'invention.

Dans toute la suite, on appellera $I$ une image de l'échantillon au temps $t$, et J une image de l'échantillon au temps $t+\tau$.

Les images $I$ et $J$ sont acquises par un détecteur matriciel.

Le découpage en régions d'intérêts peut être réalisé par le fait que les images $I$ et $J$ ne correspondent qu'à une sous-région du détecteur.

La figure 2 illustre les deux types de modifications que peut subir un échantillon 2 à étudier au cours d'un intervalle de temps $\tau$. On attribue la référence numérique 2 à l'échantillon au temps $t$ et 2' à l'échantillon au temps $t+\tau$.

Entre les instants $t$ et $t+\tau$, l'échantillon 2 a subi :

- un décalage global par rapport à un référentiel (ici le détecteur matriciel), appelé mouvement rigide, et symbolisé par la flèche épaisse 3 ;
- des réarrangements internes de particules 5 appelés dynamique microscopique interne et symbolisés par les flèches 4, 4', 4", etc.

Des croix 5 illustrent la position de quelques particules (ou éléments en suspension dans un milieu) sur l'échantillon au temps $t$. Ces particules se trouvent aux positions indiquées par des ronds 6 sur l'échantillon au temps $t+\tau$.

L'intensité lumineuse des images $I$ et $J$ varie à cause des deux mécanismes énoncés ci-avant :

- le mouvement global de l'échantillon 2 par rapport au détecteur ;
- le mouvement relatif de chaque particule par rapport aux autres (dynamique microscopique interne).

La figure 3 montre une vue en perspective d'une représentation de la fonction de corrélation croisée entre les images $I$ et $J$. Cette fonction présente un pic de corrélation 7. La position du pic de corrélation 7 correspond au décalage rigide intervenu entre les instants $t$ et $t+\tau$. La hauteur $H$ du pic de corrélation 7 est représentative des modifications dues à la dynamique microscopique interne, entre les instants $t$ et $t+\tau$.

Dans une première étape du procédé, on calcule le mouvement rigide correspondant au décalage global entre les images $I$ et $J$.

Pour cela :

- on calcule les termes de la matrice de covariance croisée cov$[J,I](k,l)$ entre les images $I$ et $J$. Pour des raisons d'efficacité de calcul, cette matrice cov$[J,I]$ est calculée dans l'espace de Fourier : on calcule la transformée de Fourier des intensités sur les deux images, on applique un algorithme transformée de Fourier et on détermine cov$[J,I]$ en faisant la transformée de Fourier inverse du produit des transformées de Fourier ;
- on en déduit les termes de la matrice de corrélation croisée corr$[J,I](k,l)$ entre les images $I$ et $J$ ;
- on détermine deux indices $\overline{k}$ et $\overline{l}$ correspondant aux coordonnées du terme maximal de la matrice de corrélation croisée entre les images $I$ et $J$.

On obtient alors le mouvement rigide avec une précision au pixel près.

Pour simplifier les explications, on va considérer à la figure 4 que les images $I$ et $J$ sont chacune une unique ligne de pixels. L'intervalle 9 correspond à un pixel d'une image. A la figure 4, les hauteurs des croix 8 représentent les valeurs prises par les termes de la matrice de corrélation croisée entre les images $I$ et $J$. La croix 8' située à la colonne $\overline{l}$ correspond à la valeur maximale de la matrice de corrélation croisée entre les images $I$ et $J$. La hauteur 11 de la crois 8' correspond au mouvement rigide entre les images $I$ et $J$, au pixel près.

On souhaite ensuite obtenir une précision inférieure au pixel.

Plusieurs procédés connus peuvent être mis en oeuvre pour améliorer cette résolution :

- On peut par exemple calculer le centre de masse du pic de corrélation à partir des valeurs prises par les termes de la matrice de corrélation croisée à proximité du terme de la ligne $\overline{k}$, colonne $\overline{l}$ ;
- On peut aussi ajuster le pic de corrélation à une fonction à deux dimensions.

Dans le premier cas, le pic de corrélation est supposé avoir une symétrie circulaire tandis que dans le deuxième cas, le choix de la forme de la fonction devient crucial.

Dans la pratique, il est rare d'avoir une symétrie circulaire pour la forme du pic de corrélation et la seconde méthode peut s'avérer insatisfaisante en particulier lorsque la largeur du pic n'est que de quelques pixels.

Un objet de l'invention est précisément de proposer un procédé particulièrement avantageux dans le contexte de la mesure de dynamique interne notamment en présence d'un déplacement rigide, pour améliorer la précision et la rapidité de calcul sur la mesure de la position du pic de corrélation. Pour des raisons de clarté de la description, ce procédé est détaillé plus loin.

A l'issue de cette étape, on peut atteindre par exemple une précision de la localisation du sommet du pic de corrélation correspondant à une fraction de pixel. Pour des raisons de lisibilité, on illustre à la figure 4 un cas où la précision atteinte correspond à un quart de pixel (intervalle 10). En réalité, on peut atteindre des précisions de l'ordre du centième de pixel (soit quelques dizaines de nm).

On exprime ensuite le mouvement rigide de la façon suivante :

- $\Delta x = j_x + \tilde{\delta x}$ avec $0 \leq \tilde{\delta x} < 1$, est la composante de ce mouvement rigide le long d'une ligne de pixels avec une précision inférieure au pixel,
- $\Delta y = i_y + \tilde{\delta y}$ avec $0 \leq \tilde{\delta y} < 1$, est la composante de ce mouvement rigide le long d'une colonne de pixels avec une précision inférieure au pixel. On note que $\Delta x$ et $\Delta y$ sont des estimations de déplacements rigides réels.

A la figure 4, l'intervalle 12 est égal à $\tilde{\delta x}$. $j_x$ est le plus grand nombre entier inférieur ou égal à la composante le long d'une ligne de pixels du déplacement rigide réel. (De même $i_y$ est le plus grand nombre entier inférieur ou égal à la composante le long d'une colonne de pixels du déplacement rigide réel).

Selon une méthode connue dans l'art antérieur, afin de quantifier la dynamique interne du système corrigée pour l'effet du déplacement rigide, une fois que l'on a calculé le déplacement entre les images $I$ et $J$ avec une résolution inférieure au pixel, on décale l'image $I$ de $\Delta x$, $\Delta y$ par interpolation de l'image $I$ pour obtenir l'image $I'$, puis on calcule le coefficient de corrélation entre l'image $J$ et l'image $I'$ :

$$c_{I,corr}(t,\tau) = \frac{\left\langle I'_p(t)J_p(t+\tau)\right\rangle_p}{\left\langle I'_p(t)\right\rangle_p \left\langle J_p(t+\tau)\right\rangle_p} - 1 ,$$ (Eq. 12)

Où $p$ est un indice sur les pixels, et$< >_p$ désigne une moyenne sur les pixels.

Comme expliqué précédemment, ces opérations sont très coûteuses en termes de calculs.

L'idée qui est à la base de l'invention est de proposer de calculer directement un coefficient de corrélation entre les images $I$ et $J$, corrigé du déplacement rigide entre les images $I$ et $J$.

On commence par exprimer l'image $I'$ interpolée comme étant une convolution de l'image $I$ avec un noyau de convolution $_{2D}h(x,y)$, qui est une fonction à deux dimensions symétrique séparable :

$$I'_{r,c} = \sum_{k,l} h(r + \Delta y - k)h(c + \Delta x - l)I_{k,l}$$ (Eq. 13)

On choisit en particulier un noyau de type sinus cardinal modulé par une fenêtre de type Blackman-Harris :

$$h(x) = w(x) \cdot \text{sinc}(x) = w(x) \cdot \sin(\pi x)/(\pi x)$$ (Eq. 14)

pour $\left|x\right| \le \dfrac{Q}{2}$ et $h(x) = 0$ sinon, avec Q un entier pair et

$$w(x) = 0.42323 + 0.49755\cos\left(\frac{2\pi x}{Q}\right) + 0.07922\cos\left(\frac{4\pi x}{Q}\right).$$ (Eq. 15)

Le noyau $h$ est ainsi normalisé : en effet, pour tout $x$, $0 \le x < 1$, on a :

$$\sum_{k,l=-Q/2+1}^{Q/2} h(x) = 1 .$$ (Eq. 16)

On a alors

$$I'_{r,c} = \sum_{k,l=-Q/2+1}^{Q/2} h(\widetilde{\delta y} - k)h(\widetilde{\delta x} - l)I_{r+k+i_y,c+l+j_x}$$ (Eq. 17)

En combinant cette équation à la définition du coefficient de corrélation entre l'image $J$ et l'image $I'$, en utilisant en outre la définition de la matrice de covariance et le fait que le noyau de convolution h est normalisé, on obtient finalement :

$$C'_I(t,\tau) = \frac{\displaystyle\sum_{k,l=-Q/2+1}^{Q/2} h(\widetilde{\delta y} - k)h(\widetilde{\delta x} - l)\,\text{cov}[J,I](k+i_y,l+j_x)}{\overline{J}\,\overline{I}} ,$$ (Eq. 18)

avec

$$\overline{I} = N^{-1}\sum_{r,c} I_{r,c} \text{ et } \overline{J} = N^{-1}\sum_{r,c} J_{r,c} \, .$$

On choisit de nommer ce résultat $C'_I(t,\tau)$ le coefficient de corrélation corrigé, pour mettre en évidence le fait qu'il est obtenu directement à partir des images $I$ et $J$ en tenant compte des déplacements $\Delta x$ et $\Delta y$. Il n'est donc pas nécessaire de calculer l'image $I'$.

$C'_I(t,\tau)$ est obtenu simplement par combinaison linéaire de $Q^2$ termes de la matrice de covariance $\text{cov}[J,I](k,l)$, pondérés par le noyau de convolution $_{2D}h(x,y)$. Comme les termes $\text{cov}[J,I](k,l)$ ont été déjà calculés pour déterminer le mouvement rigide, le coût supplémentaire en terme de calculs est essentiellement limité à l'évaluation de $Q^2$ valeurs du noyau de convolution, ce qui est typiquement négligeable.

On peut remarquer que $\text{cov}[J,I](k,l)$ tend rapidement vers zéro lorsque son argument s'éloigne de $(i_y, j_x)$, qui est proche du pic de la covariance. Il s'ensuit que les termes de la matrice $\text{cov}[J,I](k,l)$ sont sensiblement nuls dès qu'on s'éloigne de quelques pixels du pixel $(i_y, j_x)$.

En particulier, lorsque les images $I$ et $J$ sont des images de speckle, on peut faire en sorte que la taille d'une tache de speckle soit de l'ordre de la taille d'un pixel du détecteur. Donc, il est suffisant de choisir $Q$ de l'ordre de la taille d'un speckle (en unité de pixel). Par exemple, pour des images avec une taille de speckle de l'ordre de 5 pixels, nous avons vérifié que la correction ne dépend pas de $Q$ pour $Q \geq 8$.

On utilise ce coefficient de corrélation corrigé $C'_I(t,\tau)$ pour caractériser la dynamique microscopique interne de l'échantillon étudié.

On peut retrouver des informations quantitatives sur cette dynamique, simplement par observation de l'évolution au cours du temps de ce coefficient une baisse rapide de la valeur de ce coefficient correspondant à un mouvement rapide et désordonné des particules dans l'échantillon étudié.

On peut aussi retrouver des informations qualitatives sur la dynamique microscopique interne de l'échantillon.

Le signal $C_I'(t,\tau)$ de l'équation (18) peut notamment être interprété dans le cadre de la théorie de la diffusion dynamique de la lumière (DLS). A cet égard, on peut par exemple se référer au document suivant : Berne, B.J. and R. Pecora, « *Dynamic Light Scattering* ». 1976: Wiley, New York.

On va détailler ci-dessous une telle interprétation :
On s'intéresse dans ce cadre à la variation de $C_I'(t,\tau)$ avec $\tau$, pour $t$ fixé, ou bien après moyenne sur $t$. (On utilise donc plusieurs images $J$ comparées à une même image $I$.)

Cette variation est notée $g_2(\tau)-1$ dans la littérature sur la DLS. La fonction $g_2(\tau)-1$ renseigne sur la dynamique microscopique. En particulier, $g_2(\tau)-1$ est proportionnelle au facteur de structure dynamique $f(q,\tau)$ :

$$g_2(\tau)-1 = \beta\big[f(q,\tau)\big]^2 \qquad\qquad \text{(Eq. 19)}$$

où $\beta \leq 1$ est une constante qui dépend de l'optique de collection au travers de laquelle des images $I$ et $J$ sont acquises,

$q = \dfrac{4\pi n}{\lambda}\sin\!\left(\dfrac{\theta}{2}\right)$ est le module du vecteur de diffusion, avec $n$ l'indice de réfraction du fluide, $\lambda$ la longueur d'onde dans le vide de la source et $\Theta$ l'angle de diffusion de la lumière détectée.

Le facteur de structure dynamique est défini par $f(q,\tau)=\sum_{j,k}\exp[i\mathbf{q}\cdot(\mathbf{r}_j(0)-\mathbf{r}_k(\tau)]$, où la somme est sur toutes les particules et $\mathbf{r}_j(t)$ est la position de la $j$-ème particule au temps $t$. Le facteur de structure dynamique renseigne donc quantitativement sur l'évolution des coordonnées microscopiques des particules au cours du temps.

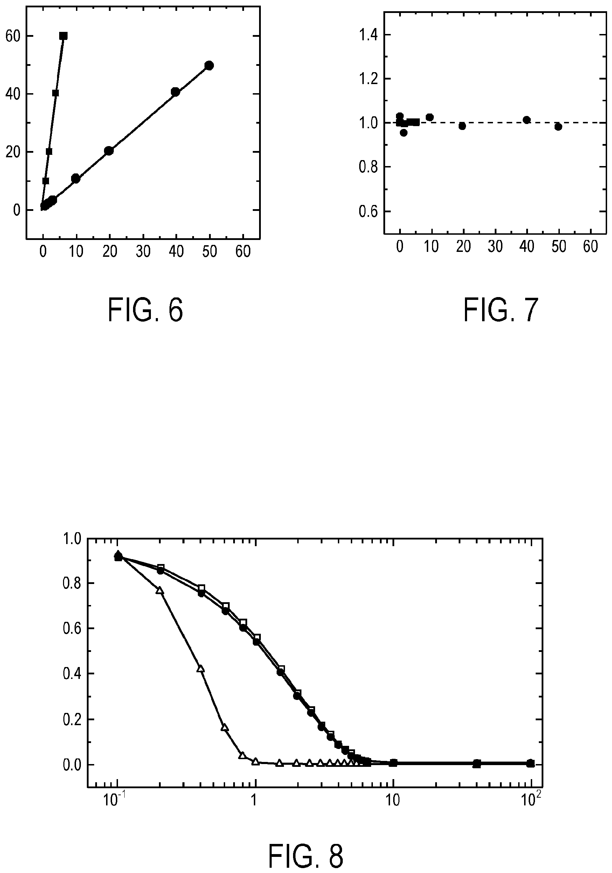

En particulier, dans le cas de particules sphériques de rayon $R$, n'interagissant pas les unes avec les autres et animées de mouvement Brownien (comme c'est le cas des mesures montrées en figure 8), on a :

$$g_2(\tau)-1 = \beta\big[\exp\!\left(-Dq^2\tau\right)\big]^2 , \qquad\qquad \text{(Eq. 20)}$$

avec $D$ le coefficient de diffusion des particules, donné par la formule de Stokes-Einstein:

$$D = \dfrac{k_B T}{6\pi\eta R} , \qquad\qquad \text{(Eq. 21)}$$

où $k_B$ est la constante de Boltzmann, $T$ la température absolue et $\eta$ la viscosité du fluide dans lequel les particules sont suspendues.

On retrouve donc, à partir de la variation de $C_l'(t, \tau)$ en fonction du retard $\tau$ pour $t$ fixé, le coefficient de diffusion des particules de l'échantillon de matière étudié.

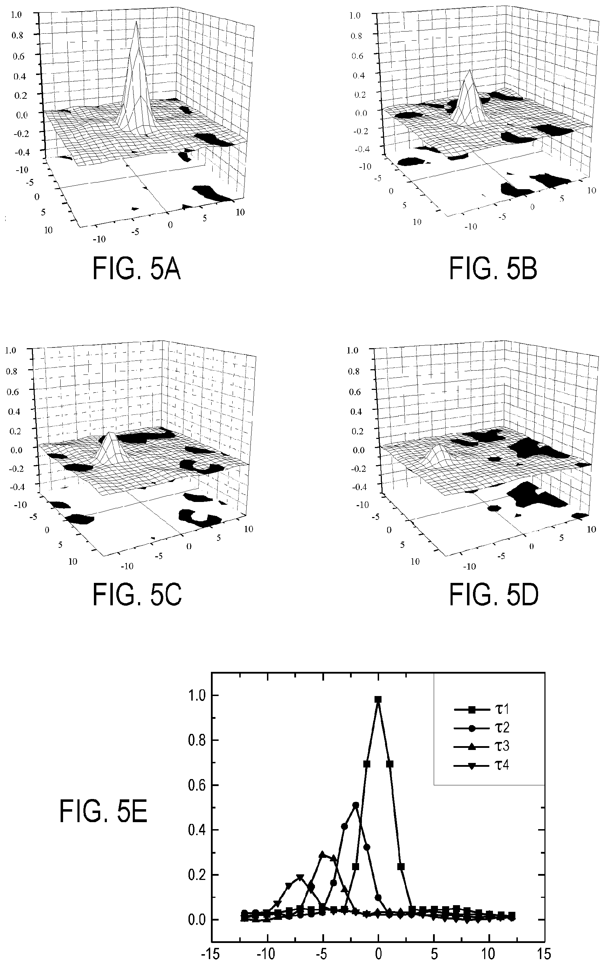

On va maintenant détailler un test du procédé selon l'invention, à l'aide des figures 5A à 5D.

Pour cela, on utilise un échantillon comprenant une suspension colloïdale de particules animées d'un mouvement Brownien (sous l'effet de l'énergie thermique). L'échantillon est déplacé de manière rigide vers le bas à vitesse constante, à l'aide d'un moteur. Dans ce cas, la dynamique microscopique interne est due au mouvement Brownien des particules et le mouvement rigide à l'action du moteur.

Les figure 5A, 5B, 5C et 5D montrent les fonctions de corrélation spatiale croisées entre une image $I$ acquise au temps $t$ et respectivement :

- une image $J_1$ acquise au même temps $t$ ;
- une image $J_2$ acquise au temps $t+\tau$ ;
- une image $J_3$ acquise au temps $t+2\tau$ ;
- une image $J_4$ acquise au temps $t+3\tau$.

La figure 5A représente la fonction d'auto-corrélation de l'image $I$. On observe bien :

- un pic centré en (0, 0), soit un mouvement rigide entre les deux images nul,
- et une hauteur du pic égale à 1, soit un coefficient de corrélation corrigé maximum, ce qui signifie que le taux de ressemblance entre les deux images est de 100%.

Au fur et à mesure que le retard entre les deux images augmente (figures 5B, 5C, 5D) :

- la position du pic se déplace vers la gauche (ce qui correspond au mouvement rigide vers le bas imposé par le moteur), et
- la hauteur du pic diminue, ce qui signifie que le taux de ressemblance entre les deux images étudiées diminue à cause de la dynamique interne microscopique associée au mouvement Brownien.

La figure 5E montre une superposition de coupes des représentations des figures 5A à D. En référence à la figure 5E, $\tau_1$=0s ; $\tau_2$=1s ; $\tau_3$=2s ; $\tau_4$=3s. On retrouve les observations ci-dessus.

La figure 8 illustre des évolutions du coefficient de corrélation corrigé entre deux images $I$ et $J$. L'axe des abscisses est gradué en secondes et correspond au décalage $\tau$ entre les instants d'acquisition t=0 et t+ $\tau$ des images $I$ et $J$. L'axe des ordonnées est gradué de 0 à 1, sans unité, et correspond à la valeur du coefficient de corrélation entre deux images.

Les points en forme de carré représentent, pour un déplacement rigide nul, l'évolution en fonction du temps du coefficient de corrélation tel que défini dans l'art antérieur, c'est-à-dire le coefficient de corrélation entre les images $I$ et J.

Les points en forme de triangle représentent, pour un déplacement rigide non nul, l'évolution en fonction du temps du coefficient de corrélation tel que défini dans l'art antérieur, entre les images $I$ et J (donc, sans correction pour le déplacement rigide).

Les points en forme de rond représentent, pour un déplacement rigide non nul, l'évolution en fonction du temps du coefficient de corrélation corrigé obtenu par le procédé selon l'invention, entre les images $I$ et $J$.

On voit que le procédé selon l'invention permet d'obtenir, en présence d'un mouvement rigide, des résultats très proches à ceux obtenus en l'absence de tout déplacement rigide. En d'autres termes, le procédé selon l'invention corrige de façon efficace la contribution du mouvement rigide à la dynamique interne mesurée par diffusion de la lumière, tout en nécessitant un temps de calcul très limité. On peut par exemple obtenir un résultat en moins de 0,1s par paire d'images avec un ordinateur de bureau courant.

On va maintenant décrire plus en détail un aspect du procédé selon l'invention permettant de déterminer avec une précision subpixel (inférieure au pixel) le mouvement rigide entre deux images $I$ et $J$.

Cet aspect du procédé est basé sur un algorithme de minimisation du carré de la différence entre les deux images, en négligeant à ce stade la dynamique microscopique interne.

Dans un premier temps, en supposant que l'image $J$ soit une réplique à l'identique de l'image $I$ (au décalage dû au mouvement rigide près), on exprime l'intensité $J_{r,c}$ du pixel $(r, c)$ comme étant une moyenne pondérée des intensités enregistrées sur un nombre opportun de pixels de l'image $I$, déterminés en connaissant le mouvement rigide au pixel près (soit le décalage de $\bar{k}$ lignes, et $\bar{l}$ colonnes).

En principe pour chaque pixel de l'image $J$, neuf coefficients doivent être calculé correspondant au pixel de $I$ de même position et aux huit pixels adjacents de $I$.

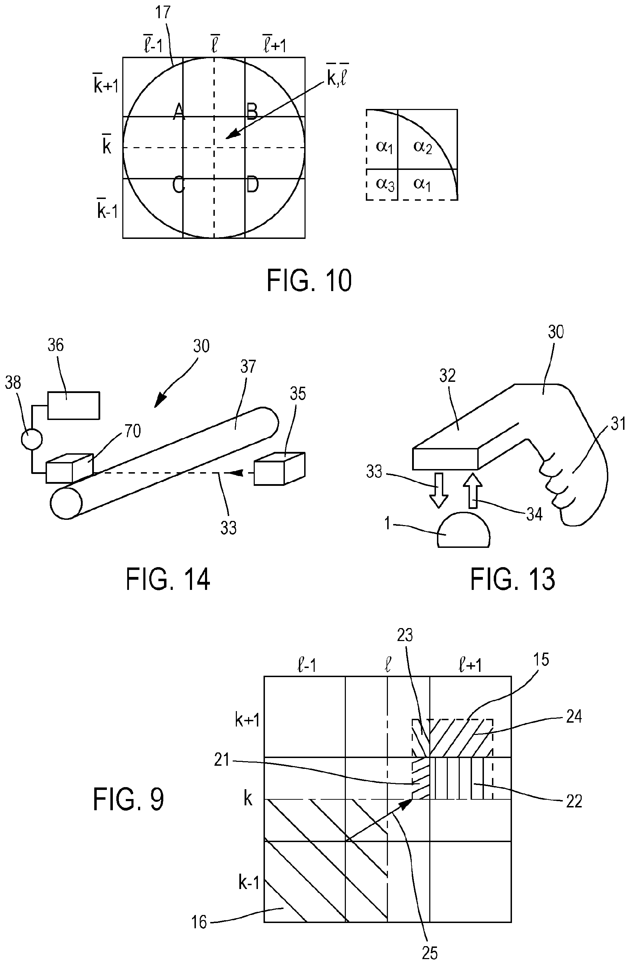

La figure 9 illustre le déplacement subpixel entre des images I et J selon l'invention. La figure 9 montre neuf pixels de l'image 1 : trois lignes d'indices *k-1, k, k+1* et trois colonnes d'indices *l-1, l, l+1*. La figure 9 montre un pixel de l'image *J,* dessiné en pointillés 15.

Le calcul peut être simplifié et accéléré si on remarque que seulement quatre de ces coefficients sont à priori différents de zéro puisque le mouvement rigide doit se faire forcément en direction d'un seul quadrant 16 (haut-gauche, haut-droite, bas-gauche, bas-droite). Un des quadrants 16 est représenté en hachures à la figure 9.

Pour déterminer en direction de quel quadrant le déplacement se fait, nous utilisons le procédé ci-dessous : Dans les images généralement étudiées, la taille des taches de speckle est comparable à celle des pixels du détecteur. Donc, le pic de corrélation a une largeur de quelques pixels au plus.

On choisi donc de calculer le centre de masse du pic sur la base des valeurs de corr[*J,I*](*k,l*) à son maximum (en $\overline{k},\overline{l}$) et dans les huit pixels voisins.

La figure 10 illustre des pixels de la matrice de corrélation croisée entre les images *I* et *J* autour de sa valeur maximale (pixel de la ligne $\overline{k}$, colonne $\overline{l}$).

Les lignes pointillées définissent quatre quadrants « virtuels » (A, B, C, et D) correspondant à des déplacements haut-gauche, haut-droite, bas-gauche, bas-droite, respectivement.

Le but est de déterminer dans lequel des quatre quadrants A, B, C ou D se trouve le centre de masse du pic de corrélation.

Pour éviter tout biais introduit par l'orientation des pixels, on pondère la contribution des différents pixels en fonction de leur surface de recouvrement avec le disque 17 qui est le plus grand disque inscrit dans les neuf pixels considérés.

On en déduit des coefficients $\alpha_1$, $\alpha_2$, $\alpha_3$ qui représentent l'aire (en unité de surface de pixel) de l'intersection de chaque quadrant (délimité par le cercle 17) avec les différents pixels de la matrice corr[*J,I*](*k,l*). A la figure 10, ces coefficients sont indiqués pour le quadrant B. Ils valent, respectivement,

$$\alpha_1 = 0{,}485869913,$$

$$\alpha_2 = 0{,}545406041, \text{ et}$$

$$\alpha_3 = 0{,}25. \tag{Eq. 22}$$

Les « poids » ou portions du pic de corrélation croisée correspondant aux quadrants A, B, C et D, peuvent être calculé(e)s de la manière suivante, respectivement :

$$w_A = \alpha_1[corr[J,I](\overline{k}-1,\overline{l}) + corr[J,I](\overline{k},\overline{l}-1)]$$
$$+ \alpha_2 corr[J,I](\overline{k}-1,\overline{l}-1) + \alpha_3 corr[J,I](\overline{k},\overline{l}),$$

$$w_B = \alpha_1[corr[J,I](\overline{k}-1,\overline{l}) + corr[J,I](\overline{k},\overline{l}+1)]$$
$$+ \alpha_2 corr[J,I](\overline{k}-1,\overline{l}+1) + \alpha_3 corr[J,I](\overline{k},\overline{l}),$$

$$w_C = \alpha_1[corr[J,I](\overline{k},\overline{l}-1) + corr[J,I](\overline{k}+1,\overline{l})]$$
$$+ \alpha_2 corr[J,I](\overline{k}+1,\overline{l}-1) + \alpha_3 corr[J,I](\overline{k},\overline{l}),$$

$$w_D = \alpha_1[corr[J,I](\overline{k},\overline{l}+1) + corr[J,I](\overline{k}+1,\overline{l})]$$
$$+ \alpha_2 corr[J,I](\overline{k}+1,\overline{l}+1) + \alpha_3 corr[J,I](\overline{k},\overline{l}). \tag{Eq. 23}$$

On en déduit les décalages du centre de masse du pic de corrélation :

$$\delta r = \frac{w_C + w_D - w_A - w_B}{w_C + w_D + w_A + w_B} \text{ , et}$$

$$\delta c = \frac{w_B + w_D - w_A - w_C}{w_C + w_D + w_A + w_B} \qquad \text{(Eq. 24)}$$

Comme expliqué précédemment, l'intensité $J_{r,c}$ du pixel $(r, c)$ est considérée comme étant une moyenne pondérée des intensités enregistrées sur un nombre opportun de pixels de l'image I, c'est-à-dire des quatre pixels du cadrant dans lequel se trouve le centre de masse.

Dans la suite, on note $a_1$, $a_2$, $a_3$, $a_4$ les quatre coefficients de pondération non nuls et $k_1$, $k_2$, $k_3$, $k_4$ et $l_1$, $l_2$, $l_3$, $l_4$ les offsets des pixels correspondants pour l'image $I$, de sorte que l'on peut exprimer l'intensité $J_{r,c}$ par une moyenne pondérée des intensités enregistrées sur les quatre pixels correspondants de l'image I :

$$J_{r,c} = \sum_{i=1}^{4} a_i I_{r+k_i, c+l_i} \cdot \qquad \text{(Eq. 25)}$$

Les coefficients $a_1$, $a_2$, $a_3$, $a_4$ correspondent aux surfaces de superposition respectivement 21, 22, 23, 24 à la figure 9. A la figure 9, le déplacement entre les images est mis en évidence par la flèche 25. De façon générale, les portions de pixel $a_1$ et $a_2$ sont agencées en ligne, les portions de pixel $a_3$ et $a_4$ sont agencées en ligne, les portions de pixel $a_2$ et $a_4$ sont agencées en colonne, et les portions de pixel $a_1$ et $a_3$ sont agencées en colonne.

Les indices $k_1$, $k_2$, $k_3$, $k_4$ et $l_1$, $l_2$, $l_3$, $l_4$ sont déterminés de la façon suivante :

$$k_1 = k_2 = \text{floor}(\bar{k} + \delta r) \text{ ,}$$

$$k_3 = k_4 = k_1 + 1 \text{,}$$

$$l_1 = l_3 = \text{floor}(\bar{l} + \delta c) \text{,}$$

$$l_2 = l_4 = l_1 + 1 \text{.} \qquad \text{(Eq. 26)}$$

floor($x$) est la fonction qui renvoie le plus grand entier inférieur à $x$.

Dans le cas général, l'image $J$ n'est pas une réplique identique de l'image $I$ à cause de la dynamique interne de l'échantillon.

On conserve l'hypothèse que l'intensité sur chaque pixel de $J$ est toujours approximée par l'équation 25, et on détermine le déplacement $\Delta x$, $\Delta y$ qui maximise la ressemblance entre les deux images au sens des moindres carrés.

Pour cela, on introduit une fonction coût en utilisant l'interpolation linéaire, qui peut s'écrire en tenant compte du fait que le cadrant a déjà été déterminé :

$$\chi^2(a_1, a_2, a_3, a_4) = \sum_{r,c} \sum_{i=1}^{4} \left( a_i I_{r+k_i, c+l_i} - J_{r,c} \right)^2 \cdot \qquad \text{(Eq. 27)}$$

On cherche alors les coefficients $a_1$, $a_2$, $a_3$, $a_4$ qui minimisent la fonction coût.

En imposant $\partial \chi^2 / \partial a_i = 0$, on obtient quatre équations :

$$\sum_{r,c} \left[ I_{r+k_i, c+l_i} \left( \sum_{i=1}^{4} a_i I_{r+k_i, c+l_i} - J_{r,c} \right) \right] = 0 \qquad \text{(Eq. 28)}$$

On peut réécrire ces équations sous la forme :

$$b = M \cdot a \, , \qquad \text{(Eq. 29)}$$

où pour $i$ et $j$ entiers variant de 1 à 4,

$$b = \{b_i\}; \; b_i = \mathrm{cov}[J, I](k_i, l_i)$$

$$a = \{a_1, a_2, a_3, a_4\} \;\; \text{et}$$

$$M = \{M_{i,j}\}; \; M_{i,j} = \mathrm{cov}[I, I](k_i - k_j, l_i - l_j).$$

L'équation 29 correspond à l'équation 9, préalablement mentionnée.

On résout cette équation par un algorithme standard de décomposition en valeurs singulières.

Ensuite, le mouvement rigide avec une précision inférieure au pixel est obtenu par les formules suivantes :

$$\Delta x = \frac{a_2 + a_4}{\sum_{i=1}^{4} a_i} + l_1 \, , \;\; \text{et}$$

$$\Delta y = \frac{a_3 + a_4}{\sum_{i=1}^{4} a_i} + k_1 \, , \qquad \text{(Eq. 30)}$$

où $\Delta x$ est l'estimation avec une précision inférieure au pixel de la composante du mouvement rigide réel le long d'une ligne de pixels, et $\Delta y$ est l'estimation avec une précision inférieure au pixel de la composante du mouvement rigide réel le long d'une colonne de pixels.

La figure 6 illustre en fonction du temps le mouvement rigide d'un échantillon calculé avec le procédé selon l'invention, pour deux vitesses (l'une correspond aux points de forme carré, l'autre correspond aux points de forme ronde). L'axe des abscisses est gradué en secondes et correspond au temps. L'axe des ordonnées est gradué en mm et correspond à un déplacement rigide. Le mouvement rigide de l'échantillon est déterminé par un moteur imposant à l'échantillon une vitesse de déplacement constante par rapport au détecteur (pour acquérir les images $I$ et $J$).

La figure 7 illustre pour ces deux vitesses le rapport entre la vitesse de déplacement rigide réelle imposée par le moteur et celle mesurée par le procédé selon l'invention. L'axe des abscisses est gradué en secondes et correspond au temps. L'axe des ordonnées est sans unité et correspond à un rapport de vitesses entre la vitesse de déplacement rigide réelle imposée par le moteur et celle mesurée par le procédé selon l'invention. On observe bien, pour les deux vitesses, un rapport très proche de l'unité.

Les figures 6 et 7 montrent l'efficacité du procédé selon l'invention pour ce qui concerne la mesure du mouvement rigide de l'échantillon (du au moteur): on retrouve bien des déplacements qui augmentent linéairement avec le temps et une vitesse très proche de celle nominale imposée par le moteur.

On va s'intéresser maintenant au dispositif selon l'invention, comprenant :

- des moyens optiques et d'imagerie pour acquérir successivement plusieurs images d'un échantillon, et
- des moyens de calcul mettant en oeuvre le procédé selon l'invention.

Les moyens de calcul sont par exemple un processeur et un produit programme d'ordinateur agencé pour exécuter les étapes du procédé lorsqu'il est exécuté par le processeur.

Le dispositif 30 selon l'invention peut prendre la forme d'un « pistolet » portatif (voir figure 13) comprenant une poignée 31.

Le dispositif 30 selon l'invention comprend en outre :

- des moyens optiques et d'imagerie 32 comprenant une source lumineuse pour émettre un faisceau lumineux 33 en direction de l'objet 1, et recevant un faisceau retour 34 provenant de l'objet 1, et

- des moyens de calcul (non représentés) mettant en oeuvre le procédé selon l'invention.

Le dispositif 30 selon l'invention peut aussi se présenter sous la forme d'un dispositif inséré dans un microsystème (MEMS) avec des fonctions de microfluidique (voir figure 14).

Le dispositif 30 selon l'invention comprend alors :

- une source lumineuse 35 pour émettre un faisceau lumineux 33 en direction d'un échantillon,
- des moyens d'imagerie 70 recevant un faisceau provenant de l'échantillon, pour acquérir des images dudit échantillon grâce à un détecteur matriciel 38, et
- des moyens de calcul 36 mettant en oeuvre le procédé selon l'invention.

L'objet à étudier est un fluide s'écoulant dans un canal ou un capillaire 37.

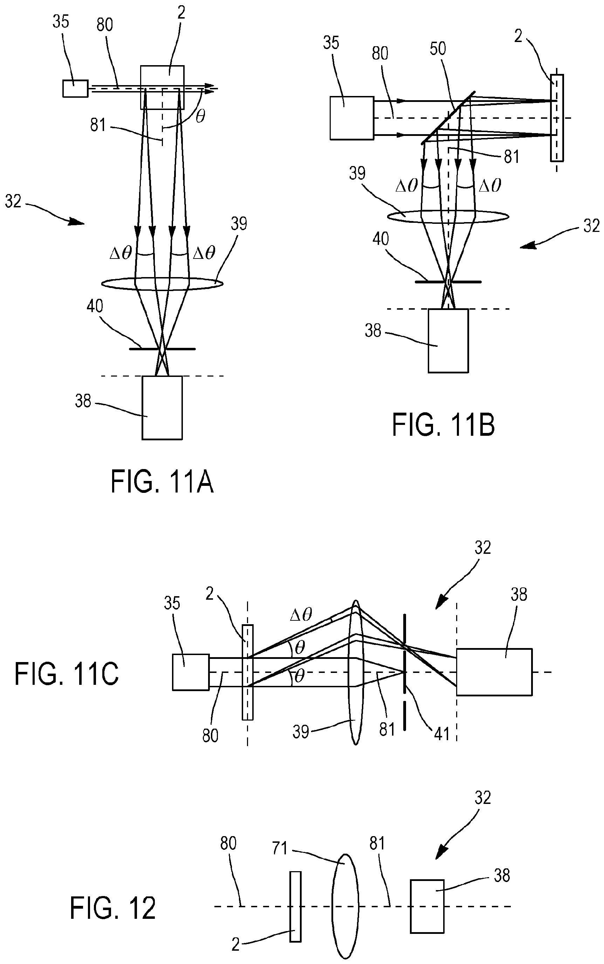

On va ensuite décrire quelques exemples de moyens optiques et d'imagerie 32, en référence aux figures 11A, 11B, 11C et 12.

La figure 12 illustre des moyens optiques et d'imagerie 32, pour former une image directe de l'échantillon.

Ces moyens 32 comprennent une optique 71 de focalisation dans le plan d'un détecteur CCD 38 d'une image de l'échantillon 2.

Une source de lumière non représentée illumine l'échantillon 2 selon un axe optique d'illumination 80 qui est confondu ici avec l'axe d'imagerie 81 correspondant à l'axe optique des moyens d'imagerie (formés ici par l'optique 71).

On utilise de préférence des images de speckle, qui permettent de visualiser des taches représentatives d'objets de très petite dimension tels que des particules dans une suspension. On peut ainsi observer des propriétés de particules de dimension trop réduite pour pouvoir être détectées directement par le système optique.

La figure 11A illustre un premier exemple de moyens optiques et d'imagerie 32 pour former une image de speckle.

Ces moyens comprennent une source de lumière cohérente 35 telle qu'un laser émettant par exemple à une longueur d'onde de 648nm.

Le faisceau lumineux est émis par le laser 35 selon l'axe optique d'illumination 80 (en pointillés) et parvient à l'échantillon 2.

Une image de l'échantillon 2 est formée sur le détecteur CCD 38, en utilisant uniquement de la lumière diffusée autour d'un angle $\Theta$ défini (par exemple 90° à la figure 11A). On parle d'image de speckle : les particules individuelles ne sont pas résolues, et l'intensité de chaque tache de speckle résulte de la contribution des particules comprises dans un volume d'épaisseur égale à l'épaisseur du faisceau (par exemple $200\mu m$) et dont la surface dépend de la taille des speckles, comme détaillé ci-dessous (par exemple $40\mu m * 40\mu m$).

Cet angle peut être n'importe quel angle de diffusion : que ce soit la diffusion aux grands angles ou la diffusion aux petits angles.

La vitesse de fluctuation des taches de speckle dépend du choix de cet angle : plus cet angle est faible, moins la figure de speckle varie rapidement. On peut donc ajuster cet angle en fonction de la dynamique du détecteur CCD 38.

La taille d'une tache de speckle sur le détecteur CCD 38 est fonction de l'ouverture numérique des moyens d'imagerie formés par la lentille 39 et le diaphragme 40. Les moyens d'imagerie sont disposés selon un axe d'imagerie 81 qui correspond avantageusement à l'axe optique du système optique formé par lesdits moyens d'imagerie.

Cette ouverture numérique dépend de $\Delta\Theta$ qui est la largeur angulaire de la lumière diffusée autour de l'angle $\Theta$, que laisse passer le diaphragme 40.

Par exemple, $\Delta\Theta=5°$.

On ajuste donc le diaphragme 40 et la lentille 39, en particulier leurs positions et le grandissement de la lentille, de façon que la taille d'une tache de speckle corresponde à la taille d'un pixel du détecteur CCD 38. La méthode pour déterminer le déplacement subpixel détaillée ci-avant est alors particulièrement précise.

Par exemple, un pixel du détecteur CCD correspond à $20\mu m$ dans l'échantillon 2.

On acquiert des images successives, par exemple à une fréquence comprise entre 0.1 et 10Hz.

La figure 11B ne sera décrite que pour ses différences par rapport à la figure 11A. La seule différence est la valeur de l'angle $\Theta$ bien défini qui est de 180° à la figure 11B. Cette différence impose d'utiliser un déflecteur 50 qui transmet le faisceau émis par le laser 35 et réfléchit un faisceau diffusé par l'échantillon.

La figure 11C ne sera décrite que pour ses différences par rapport à la figure 11A. La seule différence est la valeur de l'angle $\Theta$ bien défini qui est de 10° à la figure 11C. Pour des raisons de lisibilité de la figure, l'angle dessiné à la figure 11C est supérieur à 10°. Cette différence impose d'ajouter un cache 41 pour bloquer le faisceau transmis à travers l'échantillon 2 (par opposition au faisceau diffusé par l'échantillon 2). Ce faisceau transmis présente en effet une intensité très supérieure à l'intensité du faisceau diffusé et il est donc nécessaire de protéger du faisceau transmis le détecteur CCD 38.

Bien sûr, l'invention n'est pas limitée aux exemples qui viennent d'être décrits et de nombreux aménagements peuvent être apportés à ces exemples sans sortir du cadre de l'invention. On peut notamment prévoir d'autres applications, d'autres montages pour acquérir des images *I* et *J*, etc.

**Revendications**

1. Procédé de caractérisation de la dynamique interne d'un échantillon (2) de matière comprenant un milieu et des éléments en suspension dans ledit milieu, comprenant des étapes :

    - d'obtention d'au moins deux images *I, J* de l'échantillon (2), lesdites au moins deux images *I,J* comprenant une information sur lesdits éléments en suspension, et correspondant respectivement à des instants de mesure *t* et *t+τ*,
    - de calcul de termes d'une matrice de covariance croisée cov[*J,I*](*k,l*) entre les images *I, J*, où *k* et *l* sont les coordonnées des pixels selon les lignes et les colonnes des images, respectivement,

comprenant en outre des étapes :

    - de détermination, en utilisant ladite matrice de covariance croisée cov[*J,I*](*k,l*), de déplacements rigides $\Delta x$ selon les lignes et $\Delta y$ selon les colonnes, des éléments en suspension entre les images *I* et *J*,
    - de caractérisation de la dynamique microscopique interne de l'échantillon (2), comprenant le calcul d'un coefficient de corrélation $C'_I(t, \tau)$ corrigé de l'effet de déplacements rigides,

    **caractérisé en ce que** le calcul d'un coefficient de corrélation corrigé comprend une combinaison linéaire de termes de la matrice de covariance croisée cov[*J,I*](*k,l*) multipliés par des coefficients de pondération déterminés à partir d'une fonction $_{2D}h(x,y)$ apte à constituer une fonction noyau d'un opérateur intégral d'interpolation.

2. Procédé selon la revendication 1, **caractérisé en ce que** :

    - la fonction $_{2D}h(x,y)$ est une fonction symétrique et séparable de la forme $_{2D}h(x,y) = h(x) \cdot h(y)$ avec $h(x) = 0$ pour tout *x* tel que $|x| > Q/2$, avec *Q* entier, et
    - en écrivant les déplacements rigides sous la forme $\Delta x = j_x + \widetilde{\delta x}$ avec $j_x$ entier et $0 \le \widetilde{\delta x} < 1$, et $\Delta y = i_y + \widetilde{\delta y}$ avec $i_y$ entier et $0 \le \widetilde{\delta y} < 1$, respectivement, le calcul des coefficients de pondération comprend un produit d'une fonction $h(k)$ centrée en $\widetilde{\delta y}$ et exprimée selon les lignes *k* et d'une fonction $h(l)$ centrée en $\widetilde{\delta x}$ et exprimée selon les colonnes *l*.

3. Procédé selon la revendication 2, **caractérisé en ce que** la fonction $h(x)$ comprend une fonction sinus cardinal multipliée par une fonction fenêtre $w(x)$ :

$$h(x) = w(x) \cdot \mathrm{sinc}(x) = w(x) \cdot \sin(\pi x)/(\pi x).$$

4. Procédé selon l'une quelconque des revendications précédentes, **caractérisé en ce qu'**il comprend en outre, au titre du calcul d'un coefficient de corrélation $C'_I(t, \tau)$ corrigé de l'effet de déplacements rigides, une étape de calcul du coefficient de corrélation corrigé $C'_I(t, \tau)$ entre les images *I* et *J* selon la formule :

$$C'_I(t,\tau) = \frac{\sum_{k,l=-Q/2+1}^{Q/2} h(\widetilde{\delta y} - k) \cdot h(\widetilde{\delta x} - l) \cdot \mathrm{cov}[J,I](k+i_y, l+j_x)}{\overline{J}\,\overline{I}},$$

où $\overline{I}$ et $\overline{J}$ sont les intensités moyennes des images *I* et *J,* respectivement.

5. Procédé selon l'une quelconque des revendications précédentes, **caractérisé en ce qu'**il comprend en outre, au titre de la détermination des déplacements rigides Δ*x* et Δ*y*, des étapes :

- de calcul d'une matrice de corrélation croisée entre les images *I* et *J,*

$$\mathrm{corr}[J,I](k,l) = \frac{\mathrm{cov}[J,I](k,l)}{\sqrt{\mathrm{var}[J](k,l)\mathrm{var}[I](k,l)}} \; ,$$

où var[*I*] et var[*J*] sont la variance des images *I* et *J,* respectivement,
- de détermination du déplacement rigide avec une résolution d'un pixel $\overline{k}, \overline{l}$ lequel correspond à la position du maximum de ladite matrice de corrélation croisée corr[*J,I*],
- d'expression de pixels de l'image *J* comme combinaison linéaire de quatre pixels d'une image *K* pondérés respectivement par un coefficient $a_1$, $a_2$, $a_3$ et $a_4$, où l'image *K* correspond à l'image *I* translatée de $\overline{k}$ lignes de pixels et $\overline{l}$ colonnes de pixels,
- de détermination de coefficients $a_1$, $a_2$, $a_3$ et $a_4$ qui minimisent le carré de la différence entre l'image *J* et l'image *K,*
- de détermination à partir des coefficients $a_1$, $a_2$, $a_3$ et $a_4$, avec une précision inférieure au pixel, du déplacement rigide Δ*x* et Δ*y* entre les images *I* et *J.*

**6.** Procédé selon la revendication 5, **caractérisé en ce qu'**il comprend en outre, au titre de l'expression de pixels de l'image *J* comme combinaison linéaire de quatre pixels d'une image *K* pondérés respectivement par un coefficient $a_1$, $a_2$, $a_3$ et $a_4$, une étape de calcul de coefficients d'offset $k_1$, $k_2$, $k_3$, $k_4$ et $l_1$, $l_2$, $l_3$, $l_4$ représentatifs de la direction dans laquelle se trouve le centre de masse du pic de la fonction de corrélation croisée corr[*J,I*](*k,l*),

- laquelle direction étant définie sous la forme d'une division en quatre quadrants des neufs pixels entourant et incluant le pixel de position $\overline{k}, \overline{l}$,
- lesquels coefficients d'offset étant définis de telle sorte que, en supposant la dynamique microscopique interne nulle, l'intensité $J_{r,c}$ d'un pixel de l'image *J* de coordonnée (*r, c*) soit égale à

$$J_{r,c} = \sum_{i=1}^{4} a_i K_{r+k_i, c+l_i} \; ,$$

- lequel calcul de coefficients d'offsets comprenant des combinaisons linéaires de termes de la matrice de corrélation croisée corr[*J,I*]($\overline{k}+i, \overline{l}+j$) avec *i* = {-1,0,1} et *j* = {-1,0,1}, pondérés par des coefficients géométriques $\alpha_1$, $\alpha_2$, $\alpha_3$,
- lesquels coefficients géométriques étant sensiblement représentatifs des surfaces de recouvrement, dans un cadrant, du disque de plus grand diamètre inscrit dans les neuf pixels entourant et englobant le pixel de position $\overline{k}, \overline{l}$ avec les portions de surface de pixels incluses dans ledit quadrant.

**7.** Procédé selon la revendication 6, **caractérisé en ce qu'**il comprend en outre, une étape de détermination des coefficients $a_1$, $a_2$, $a_3$ et $a_4$ par résolution du système d'équations :

$$b = M \cdot a \; ,$$

où pour *i* et *j* entiers variant de 1 à 4,

$$b = \{b_i\}; \; b_i = \mathrm{cov}[J,I](k_i, l_i),$$

$$a = \{a_1, a_2, a_3, a_4\} \; ,$$

et

$$M = \left\{M_{i,j}\right\}; M_{i,j} = \operatorname{cov}[I, I](k_i - k_j, l_i - l_j).$$

**8.** Procédé selon l'une des revendications 6 ou 7, **caractérisé en ce qu'**il comprend en outre une étape de détermination, avec une précision inférieure au pixel, du déplacement ($\Delta x, \Delta y$) entre les images *I* et *J*, selon les équations :

$$\Delta x = \frac{a_2 + a_4}{\displaystyle\sum_{i=1}^{4} a_i} + l_1 \quad,$$

et

$$\Delta y = \frac{a_3 + a_4}{\displaystyle\sum_{i=1}^{4} a_i} + k_1 .$$

**9.** Procédé selon l'une quelconque des revendications précédentes, **caractérisé en ce qu'**il comprend en outre une étape d'obtention d'images *I* et *J* de speckle.

**10.** Procédé selon l'une quelconque des revendications précédentes, **caractérisé en ce que** l'échantillon (2) comprend au moins un produit parmi :

- un produit cosmétique,
- une peinture,
- un produit agro-alimentaire,
- un produit pharmaceutique.

**11.** Procédé selon l'une quelconque des revendications précédentes, **caractérisé en ce qu'**il comprend en outre une étape de détermination d'au moins une propriété de l'échantillon (2) parmi :

- une vitesse de sédimentation,
- une propriété rhéométrique,
- une propriété dynamique sous écoulement,
- une taille de particules,
- une réponse à une contrainte interne,
- une mesure d'agrégation de particules,
- une propriété de diffusion de la lumière.

**12.** Produit programme d'ordinateur, **caractérisé en ce qu'**il est agencé pour exécuter les étapes du procédé selon l'une quelconque des revendications 1 à 11 lorsqu'il est exécuté dans un ordinateur (36).

**13.** Dispositif (30) pour déterminer un mouvement rigide et une dynamique microscopique interne d'un échantillon (2) comprenant un milieu et des éléments en suspension dans ledit milieu, **caractérisé en ce qu'**il comprend des moyens optiques et d'imagerie (32) aptes à permettre l'obtention d'images de l'échantillon (2) comprenant une information sur lesdits éléments en suspension, et des moyens de calcul (36) aptes à mettre en oeuvre le procédé selon l'une des revendications 1 à 11.

**14.** Dispositif (30) selon la revendication 13, **caractérisé en ce que** les moyens optiques et d'imagerie (32) comprennent une source de lumière (35) apte à produire un faisceau de lumière sensiblement cohérente illuminant l'échantillon selon un axe optique d'illumination (80), et des moyens d'imagerie (70) disposés selon un axe d'imagerie (81) et aptes à former sur un détecteur matriciel (38) une image de l'effet de speckle provoqué par la diffusion de ladite lumière sensiblement cohérente par les éléments en suspension.

**15.** Dispositif (30) selon la revendication 14, caractérisé en que l'axe optique d'illumination et l'axe d'imagerie sont sensiblement perpendiculaires.

**16.** Dispositif (30) selon l'une quelconque des revendications 13 à 15, **caractérisé en ce qu'**il est apte à être porté par un opérateur pour effectuer des mesures.

**17.** Dispositif (30) selon l'une quelconque des revendications 13 à 16, **caractérisé en ce qu'**il est apte à faire des mesures sur un échantillon (2) en défilement.

**Patentansprüche**

**1.** Verfahren zum Charakterisieren der internen Dynamik einer Materialprobe, die ein Medium und Schwebstoffe in dem Medium enthält, umfassend die Schritte:

- Erhalten von zumindest zwei Bildern *I, J* der Probe (2), wobei die zumindest zwei Bilder *I, J* eine Information über die Schwebstoffe enthalten und jeweiligen Messzeitpunkten t und *t+T* entsprechen,
- Berechnen von Termen einer Kreuzkovarianzmatrix *cov[J,I](k,l)* zwischen den Bildern *I,* J, wobei *k* und *l* die Koordinaten der Pixel jeweils gemäß den Zeilen bzw. den Spalten der Bilder sind,

ferner umfassend die Schritte:

- unter Verwendung der Kreuzkovarianzmatrix *cov[J,I](k,l)* Bestimmen von fixen Verschiebungen $\Delta x$ gemäß den Zeilen und $\Delta y$ gemäß den Spalten der Schwebstoffe zwischen den Bildern *I* und *J,*
- Charakterisieren der internen mikroskopischen Dynamik der Probe (2), umfassend das Berechnen eines Korrelationskoeffizienten $C'_I(t, \tau)$, der um den Effekt von starren Verschiebungen korrigiert ist,

**dadurch gekennzeichnet, dass** das Berechnen eines korrigierten Korrelationskoeffizienten ein Linearkombinieren von Termen der Kreuzkovarianzmatrix *cov[J,I](k,l),* multipliziert mit bestimmten Gewichtungskoeffizienten, ausgehend von einer Funktion $_{2D}h(x,y)$, die dazu geeignet ist, eine Kernfunktion eines Integraloperators zur Interpolation zu bilden, umfasst.

**2.** Verfahren nach Anspruch 1, **dadurch gekennzeichnet, dass**:

- die Funktion $_{2D}h(x,y)$ eine symmetrische und separate Funktion der Form $_{2D}h(x,y)=h(x) \cdot h(y)$ mit $h(x)=0$ für alle x ist, wobei $|x| > Q/2$ mit Q ganzzahlig ist, und
- beim Schreiben der fixen Verschiebungen der Form $\Delta x = j_x + \delta\tilde{x}$, mit $j_x$ ganzzahlig und $0 \leq \delta\tilde{x} < 1$, und $\Delta y = i_y + \delta\tilde{y}$ mit $i_y$ ganzzahlig und $0 \leq \delta\tilde{y} < 1$, das Berechnen der Gewichtungskoeffizienten ein Produkt einer Funktion *h(k) ist,* die zentriert in $\delta\tilde{y}$ ist und ausgedrückt gemäß der Zeilen *k,* und einer Funktion *h(l),* die zentriert ist in $\delta\tilde{x}$ und ausgedrückt gemäß der Spalten *l*, ist.

**3.** Verfahren nach Anspruch 2, **dadurch gekennzeichnet, dass** die Funktion *h(x)* eine Kardinalsinusfunktion, multipliziert mit einer Fensterfunktion *w(x),* ist:

$$h(x)= w(x) \cdot sinc(x)=w(x) \cdot sin(\pi x)/(\pi x).$$

**4.** Verfahren nach einem der vorangehenden Ansprüche, **dadurch gekennzeichnet, dass** es ferner zum Berechnen eines Korrelationskoeffizienten $C'_I(t,\tau)$, der um den Effekt von starren Verschiebungen korrigiert ist, einen Schritt des Berechnens des korrigierten Korrelationskoeffizienten $C'_I(t,\tau)$ zwischen den Bildern *I* und *J* umfasst, und zwar nach der Formel:

$$C'_I(t,\tau) = \frac{\sum\limits_{k,l=-Q/2+1}^{Q/2} h(\delta\tilde{y}-k) \cdot h(\delta\tilde{x}-l) \cdot cov[J,I](k+i_y, l+j_x)}{\overline{J}\,\overline{I}}$$

worin $\overline{I}$ und $\overline{J}$ die mittleren Intensitäten der Bilder *I* bzw. *J* sind.

5. Verfahren nach einem der vorangehenden Ansprüche, **dadurch gekennzeichnet, dass** es ferner zum Ermitteln der fixen Verschiebungen $\Delta x$ und $\Delta y$ folgende Schritte umfasst:

- Berechnen einer Kreuzkorrelationsmatrix zwischen den Bildern $I$ und $J$,

$$\operatorname{corr}[J, I](k,l) = \frac{\operatorname{cov}[J, I](k,l)}{\sqrt{\operatorname{var}[J](k,l)\operatorname{var}[I](k,l)}}$$

worin var[$I$] und var[$J$] die Varianz der Bilder $I$ bzw. $J$ ist,
- Ermitteln der fixen Verschiebung mit einer Auflösung eines Pixels $\overline{k}, \overline{l}$, das der Position des Maximums der Kreuzkorrelationsmatrix corr[$J$,$I$] entspricht,
- Ausdrücken der Pixel des Bildes $J$ als Linearkombination von vier Pixeln eines Bildes $K$, die jeweils mit einem Koeffizienten $a_1$, $a_2$, $a_3$, $a_4$ gewichtet sind, worin das Bild $K$ dem verschobenen Bild $I$ mit $\overline{k}$ Zeilen von Pixeln und $\overline{l}$ Spalten von Pixeln entspricht,
- Ermitteln der Koeffizienten $a_1$, $a_2$, $a_3$, $a_4$, die das Quadrat der Differenz zwischen dem Bild $J$ und dem Bild $K$ minimieren,
- Ermitteln der fixen Verschiebung $\Delta x$ und $\Delta y$ zwischen den Bilden $I$ und $J$ ausgehend von den Koeffizienten $a_1$, $a_2$, $a_3$ und $a_4$ mit einer Präzision unter dem Pixel.

6. Verfahren nach Anspruch 5, **dadurch gekennzeichnet, dass** es ferner als Ausdruck von Pixeln des Bildes $J$ als eine Linearkombination von vier Pixeln eines Bildes $K$, die jeweils mit einem Koeffizienten $a_1$, $a_2$, $a_3$ und $a_4$ gewichtet sind, einen Schritt des Berechnens von Versatzkoeffizienten $k_1$, $k_2$, $k_3$ und $k_4$ und $l_1$, $l_2$, $l_3$ und $l_4$ umfasst, die repräsentativ für die Richtung sind, in welcher der Massenschwerpunkt des Peaks der Kreuzkorrelationsfunktion [$J$, $I$]($k$, $l$) liegt,

- welche Richtung definiert ist als eine Unterteilung in vier Quadranten der neun Pixel, die das Positionspixel $\overline{k}, \overline{l}$ umgeben und dieses enthalten,
- welche Versatz-Koeffizienten so definiert sind, dass unter der Annahme einer internen mikroskopischen Dynamik von Null die Intensität $J_{r,c}$ eines Pixels des Bildes $J$ der Koordinaten ($r$, $c$) gleich

$$J_{r,c} = \sum_{i=1}^{4} a_i K_{r+k_i, c+l_i}$$

ist,
- welches Berechnen der Versatz-Koeffizienten Linearkombinationen von Termen der Kreuzkorrelationsmatrix corr[$J$, $I$]($\overline{k} + i, \overline{l} + j$) umfasst mit $i = \{-1, 0, 1\}$ und $j = \{-1, 0, 1\}$, gewichtet mit geometrischen Koeffizienten $\alpha_1$, $\alpha_2$, $\alpha_3$, umfasst,
- wobei die geometrischen Koeffizienten im Wesentlichen repräsentativ sind für die in einem Quadranten überlappenden Oberflächen der Scheibe mit dem größeren Durchmesser, die in den neun Pixeln, die das Positionspixel $\overline{k}, \overline{l}$ umgeben und enthalten, eingeschrieben ist, mit Pixelflächenabschnitten, die in dem genannten Quadranten enthaltenen sind.

7. Verfahren nach Anspruch 6, **dadurch gekennzeichnet, dass** es ferner einen Schritt des Ermittelns der Koeffizienten $a_1$, $a_2$, $a_3$ und $a_4$ durch Auflösung des Gleichungssystems
$b = M \cdot a$, umfasst,
worin für i und j ganzzahlig und zwischen 1 und 4 gilt:

$$b = \{b_j\}; \; b_i = \operatorname{cov}[J, I](k_i, l_i),$$

$$a = \{a_1, a_2, a_3, a_4\}$$

und

$$M = \{M_{i,j}\};\ M_{i,j} = \mathrm{cov}[I,\ I](k_i - k_j,\ l_i - l_j).$$

**8.** Verfahren nach einem der Ansprüche 6 oder 7, **dadurch gekennzeichnet, dass** es ferner einen Schritt des Ermittelns der Verschiebung ($\Delta_x$, $\Delta_y$) zwischen den Bildern $I$ und $J$ mit einer Genauigkeit von unter einem Pixel nach den Gleichungen umfasst:

$$\Delta x = \frac{a_2 + a_4}{\sum\limits_{i=1}^{4} a_i} + l_1$$

und

$$\Delta y = \frac{a_3 + a_4}{\sum\limits_{i=1}^{4} a_i} + k_1$$

**9.** Verfahren nach einem der vorangehenden Ansprüche, **dadurch gekennzeichnet, dass** es ferner einen Schritt der Erhaltens von Speckle-Bildern $I$ und $J$ umfasst.

**10.** Verfahren nach einem der vorangehenden Ansprüche, **dadurch gekennzeichnet, dass** die Probe (2) zumindest ein Produkt umfasst aus:

- einem kosmetischen Produkt,
- einem Lack,
- einem Lebensmittelprodukt,
- einem pharmazeutischen Produkt.

**11.** Verfahren nach einem der vorangehenden Ansprüche, **dadurch gekennzeichnet, dass** es ferner einen Schritt des Ermittelns zumindest einer Eigenschaft der Probe (2) umfasst aus:

- einer Sedimentationsgeschwindigkeit,
- einer rheometrischen Eigenschaft,
- einer dynamischen Eigenschaft beim Strömen,
- einer Partikelgröße,
- einer Reaktion auf eine innere Spannung,
- eine Partikelaggregationsmessung,
- eine Lichtstreuungseigenschaft.

**12.** Computerprogrammprodukt, **dadurch gekennzeichnet, dass** es dazu ausgebildet ist, die Schritte des Verfahrens nach einem der Ansprüche 1 bis 11 bei Ausführen auf einem Computer (36) auszuführen.

**13.** Vorrichtung (30) zum Ermitteln einer starren Bewegung und einer internen mikroskopischen Dynamik einer Probe (2), die ein Medium und Schwebstoffe in dem Medium enthält, **dadurch gekennzeichnet, dass** es optische Abbildungseinrichtungen (32) enthält, die dazu ausgebildet sind, das Erhalten von Bildern der Probe (2) mit einer Information über die Schwebstoffe zu gestatten, sowie Recheneinrichtungen (36), die dazu geeignet sind, das Verfahren nach einem der Ansprüche 1 bis 11 durchzuführen.

**14.** Vorrichtung (30) nach Anspruch 13, **dadurch gekennzeichnet, dass** die optischen Abbildungseinrichtungen (32) eine Lichtquelle (35) enthalten, die dazu geeignet ist, einen im Wesentlichen kohärenten Lichtstrahl zu erzeugen, der die Probe in einer optischen Beleuchtungsachse (80) ausleuchtet, sowie Abbildungseinrichtungen (70), die in einer Abbildungsachse (81) angeordnet und dazu geeignet sind, an einem Matrixdetektor (38) ein Bild aus dem Speckle-Effekt zu bilden, der durch die Steuerung des im Wesentlichen kohärenten Lichts durch die Schwebstoffe hervorgerufen wird.

15. Vorrichtung (30) nach Anspruch 14, **dadurch gekennzeichnet, dass** die optische Beleuchtungsachse und die Abbildungsachse im Wesentlichen senkrecht zueinander verlaufen.

16. Vorrichtung (30) nach einem der Ansprüche 13 bis 15, **dadurch gekennzeichnet, dass** es dazu geeignet ist, von einem Bediener zum Durchführen von Messungen getragen zu werden.

17. Vorrichtung (30) nach einem der Ansprüche 13 bis 16, **dadurch gekennzeichnet, dass** es dazu geeignet ist, Messungen an einer vorbeilaufenden Probe (2) durchzuführen.

**Claims**

1. Method for characterizing the internal dynamics of a sample (2) of a material comprising a medium and elements in suspension in said medium, comprising the steps of:

   - obtaining at least two images $I, J$, from the sample (2), said at least two images $I, J$ comprising an item of information on said elements in suspension, and corresponding respectively to measurement times $t$ and $t+T$,
   - calculating terms of a cross-covariance matrix $\mathrm{cov}[J,I](k,l)$ between the images $I, J$, where $k$ and $l$ are the coordinates of the pixels according to the rows and the columns of the images, respectively,

   comprising in addition the steps of:

   - determining rigid displacements $\Delta x$ according to the rows, and $\Delta y$ according to the columns, of the elements in suspension between the images $I$ and $J$ by using said cross-covariance matrix $\mathrm{cov}[J,I](k,l)$,
   - characterizing the internal microscopic dynamics of the sample (2), comprising calculating a correlation coefficient $C'_I(t,\tau)$ corrected by the effect of rigid displacements,

   **characterized in that** calculating a corrected correlation coefficient comprises a linear combination of terms of the cross-covariance matrix $\mathrm{cov}[J,I](k,l)$ multiplied by weighting coefficients determined from a function $_{2D}h(x,y)$ suitable for constituting a kernel function of an integral interpolation operator.

2. Method according to claim 1, **characterized in that**:

   - the function $_{2D}h(x,y)$ is a symmetric function and separable from the form $_{2D}h(x,y) = h(x) \cdot h(y)$ with $h(x) = 0$ for any $x$ such as $|x| > \dfrac{Q}{2}$, with Q an integer, and
   - by writing the rigid displacements in the form $\Delta x = j_x + \widetilde{\delta x}$ with $j_x$ an integer and $0 \le \widetilde{\delta x} < 1$, and $\Delta y = i_y + \widetilde{\delta y}$ with $i_y$ an integer and $0 \le \widetilde{\delta y} < 1$ respectively, the calculation of the weighting coefficients comprises a product of a function $h(k)$ centred at $\widetilde{\delta y}$ and expressed according to the rows $k$ and of a function $h(l)$ centred at $\widetilde{\delta x}$ and expressed according to the columns $l$.

3. Method according to claim 2, **characterized in that** the function $h(x)$ comprises a sinc function multiplied by a window function $w(x)$:

$$h(x) = w(x) \cdot \mathrm{sinc}(x) = w(x) \cdot \sin\frac{(\pi x)}{(\pi x)}.$$

4. Method according to any one of the preceding claims, **characterized in that** it comprises in addition by way of calculating a correlation coefficient $C'_I(t,\tau)$ corrected by the effect of rigid displacements, a step of calculating the corrected correlation coefficient $C'_I(t,\tau)$ between the images $I$ and $J$ according to the formula:

$$C'_I(t,\tau) = \dfrac{\sum\limits_{k,l=-Q/2+1}^{Q/2} h(\widetilde{\delta y} - k) \cdot h(\widetilde{\delta x} - l) \cdot \mathrm{cov}[J,I](k+i_y, l+j_x)}{\overline{J}\,\overline{I}},$$

where $\overline{I}$ and $\overline{J}$ are the average intensities of the images $I$ and $J$ respectively.

**5.** Method according to any one of the preceding claims, **characterized in that** it comprises in addition, by way of determining the rigid displacements $\Delta x$ and $\Delta y$, the steps of:

- calculating a cross-correlation matrix between the images $I$ and $J$,

$$\mathrm{corr}[J,I](k,l) = \dfrac{\mathrm{cov}[J,I](k,l)}{\sqrt{var[J](k,l)\,var[I](k,l)}},$$

where var[$I$] and var[$J$] are the variance of the images $I$ and $J$ respectively,
- determining the rigid displacement with a resolution of a pixel $\overline{k}, \overline{l}$ which corresponds to the position of the maximum of said cross-correlation matrix corr[$J,I$],
- expressing pixels of the image $J$ as a linear combination of four pixels of an image $K$ that are weighted respectively by a coefficient $a_1$, $a_2$, $a_3$ and $a_4$, where the image $K$ corresponds to the translated image $I$ of $\overline{k}$ rows of pixels and $\overline{l}$ columns of pixels,
- determining coefficients $a_1$, $a_2$, $a_3$ and $a_4$ which minimize the square of the difference between image $J$ and image $K$,
- determining from the coefficients $a_1$, $a_2$, $a_3$ and $a_4$ with a precision of less than one pixel, the rigid displacement $\Delta x$ and $\Delta y$ between the images $I$ and $J$.

**6.** Method according to claim 5, **characterized in that** it comprises in addition by way of expressing pixels of image $J$ as a linear combination of four pixels of an image $K$ that are weighted respectively by a coefficient $a_1$, $a_2$, $a_3$ and $a_4$, a step of calculating offset coefficients $k_1$, $k_2$, $k_3$, $k_4$ and $l_1$, $l_2$, $l_3$, $l_4$ representative of the direction in which the centre of mass of the peak of the cross-correlation function corr[$J,I$]$(k,l)$ is located,

- said direction being defined in the form of a division into four quadrants of the nine surrounding pixels and including the pixel of position $\overline{k}, \overline{l}$,
- said offset coefficients being defined in such a way that, assuming that the internal microscopic dynamics is zero, the intensity $J_{r,c}$ of a pixel of image $J$ of coordinate $(r, c)$ is equal to

$$J_{r,c} = \sum_{i=1}^{4} a_i K_{r+k_i, c+l_i},$$

- said calculation of coefficients of offsets comprising linear combinations of terms of the cross-correlation matrix corr[$J,I$]$(\overline{k}+i,\overline{l}+j)$ with $i = \{-1,0,1\}$ and $j = (-1,0,1)$ that are weighted by the geometric coefficients $a_1$, $a_2$, $a_3$,
- said geometric coefficients being substantially representative of the surfaces of overlap, in one quadrant, of the disk of larger diameter inscribed within the nine surrounding pixels and encompassing the pixel of position $\overline{k}, \overline{l}$ with the portions of surface of pixels included within said quadrant.

**7.** Method according to claim 6, **characterized in that** it comprises in addition, a step of determining the coefficients $a_1$, $a_2$, $a_3$ et $a_4$ by resolution of the system of equations:

$$b = M \cdot a,$$

where for $i$ and $j$ integers varying from 1 to 4,

$$b = \{b_i\}; b_i = \text{cov}[J, I](k_i, l_i),$$

$$a = \{a_1, a_2, a_3, a_4\},$$

and

$$M = \{M_{i,j}\}; M_{i,j} = \text{cov}[I, I]\left(k_i - k_j, l_i - l_j\right).$$

**8.** Method according to one of claims 6 or 7, **characterized in that** it comprises in addition a step of determining with a precision of less than one pixel, the displacement ($\Delta x$, $\Delta y$) between the images *I* and *J*, according to the equations:

$$\Delta x = \frac{a_2 + a_4}{\displaystyle\sum_{i=1}^{4} a_i} + l_1 \quad ,$$

and

$$\Delta y = \frac{a_3 + a_4}{\displaystyle\sum_{i=1}^{4} a_i} + k_1$$

**9.** Method according to any one of the preceding claims, **characterized in that** it comprises in addition a step of obtaining speckle images *I* and *J*.

**10.** Method according to any one of the preceding claims, **characterized in that** the sample (2) comprises at least one product among:

- a cosmetic product,
- a paint,
- an agri-food product,
- a pharmaceutical product.

**11.** Method according to any one of the preceding claims, **characterized in that** it comprises in addition a step of determining at least one property of the sample (2) among:

- a sedimentation rate,
- a rheometric property,
- a dynamic flow property,
- a particle size,
- a response to an internal stress,
- a particle aggregation measurement,
- a light diffusion property.

**12.** Computer program product, **characterized in that** it is arranged in order to execute the steps of the method according to any one of claims 1 to 11 when it is executed in a computer (36).

**13.** Device (30) for determining a rigid movement and an internal microscopic dynamics of a sample (2) comprising a medium and elements in suspension in said medium, **characterized in that** it comprises optical and imaging means (32) suitable for allowing images to be obtained from the sample (2) comprising an item of information on said elements in suspension, and calculation means (36) suitable for implementing the method according to one of claims 1 to 11.

**14.** Device (30) according to claim 13, **characterized in that** the optical and imaging means (32) comprise a light source (35) suitable for producing a substantially coherent light beam illuminating the sample along an optical axis of illumination (80) and imaging means (70) placed along an imaging axis (81) and suitable for forming, on a matrix sensor (38), a speckle-effect image caused by the diffusion of said substantially coherent light by the elements in suspension.

**15.** Device (30) according to claim 14, **characterized in that** the axis of optical illumination and the axis of imaging are substantially perpendicular.

**16.** Device (30) according to any one of claims 13 to 15, **characterized in that** it is suitable for being carried by an operator for carrying out measurements.

**17.** Device (30) according to any one of claims 13 to 16, **characterized in that** it is suitable for taking measurements on a moving sample (2).

FIG. 1

FIG. 2

FIG. 3

FIG. 4

FIG. 5A

FIG. 5B

FIG. 5C

FIG. 5D

FIG. 5E

FIG. 6

FIG. 7

FIG. 8

FIG. 11A

FIG. 11B

FIG. 11C

FIG. 12

FIG. 10

FIG. 14

FIG. 13

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 20020183601 A1

**Littérature non-brevet citée dans la description**

*   **D. EI MASRI ; G. BRAMBILLA ; M. PIERNO ; G. PETEKIDIS ; A.B. SCHOFIELD ; L. BERTHIER ; L. CIPELLETTI.** Dynamic light scattering measurements in the activated regime of dense colloidal hard spheres. *Journal of Statistical Mechanics: Theory and Experiment,* 2009, 07015